# EUROPEAN PATENT SPECIFICATION

(11) **EP 2 262 960 B1**
(45) Date of publication and mention of the grant of the patent: **18.12.2019**
(21) Application number: 08873393.6
(22) Date of filing: 25.09.2008
(51) Int. Cl.: E04C 2/04, C04B 28/26, B28B 19/00, E04B 1/90, E04B 1/84

(54) **WALLBOARD MATERIALS INCORPORATING A MICROPARTICLE MATRIX**
EINE MIKROPARTIKELMATRIX UMFASSENDE WANDBAUPLATTENMATERIALIEN
MATÉRIAUX DE PANNEAU MURAL INCORPORANT UNE MATRICE DE MICROPARTICULES

(30) Priority: 21.03.2008 US 77951; 18.07.2008 US 81949
(43) Date of publication of application: 22.12.2010
(73) Proprietor: Ash Tech Industries, L.L.C., Provo, UT 84604 (US)
(72) Inventor: KIPP, Michael, D., Provo UT 84604 (US); PUGH, Dilworth, L., Mapleton UT 84664 (US); RIDGES, Michael, D., American Fork UT 84003 (US); MCCARVILL, William, T., Salt Lake City UT 84121 (US)
(74) Representative: Walker, Ross Thomson
(86) International application number: PCT/US2008/077759
(87) International publication number: WO 2009/117021

(56) References cited:
- EP-A1- 0 475 302
- WO-A1-2008/116188
- JP-A- 5 269 722
- JP-A- H06 116 056
- JP-A- 2002 144 468
- US-A- 5 256 222
- US-B1- 6 251 979

## Description

### FIELD OF THE INVENTION

The present invention relates generally to various utility and/or building materials, such as wallboard, etc. Accordingly, the present invention involves the fields of chemistry, chemical engineering, manufacturing engineering, construction, and materials science.

### BACKGROUND OF THE INVENTION AND RELATED ART

Many different types of building or utility materials, such as wallboard insulation, blown-in insulation, acoustical or sound dampening/absorbing materials, etc. exist in the art. These are all designed to provide a specific function within a structure. In addition, the composition of ingredients or components making up these utility materials varies greatly. Although there are many different available compositions making up the many different utility materials, relatively few of these incorporate microparticles, such as naturally occurring cenospheres or Extendospheres™, or synthetically manufactured microparticles, into their makeup.

In addition, many different types of naturally occurring and artificial microparticles exist. Cenospheres are naturally occurring microparticles that are part of the "fly ash" byproduct generated in coal burning plants. Billions of tons of coal are burned annually in many plants worldwide to generate electricity, and as a result, over 100 million tons of coal or fly ash byproduct is produced. Fly ash is the fine powder formed from the mineral matter in coal, consisting of the noncombustible matter in coal plus a small amount of carbon that remains from incomplete combustion. It is called "fly" ash because it is transported from the combustion chamber by exhaust gases. Fly ash is generally light tan in color and consists mostly of different sized glassy spheres, the cenospheres. Properties of fly ash vary significantly with coal composition and plant operating conditions. Only a small percentage of the total amount is used, with the rest being disposed of mainly in landfills. Increasing cost and heightened regulations are making the disposal of fly ash an undesirable option. Although fly ash has found its way into a variety of useful applications in different industries, including the building and construction industries, for one or more reasons its success as a suitable utility or building material has been limited. Two specific classes of fly ash are defined by ASTM C618: Class F and Class C. The class distinction relies principally on differing content of components in the ash. As such, the differing classes can behave chemically different. One major distinction is the amount of lime or calcium oxide typically present. In Class F fly ash, generally less than 10 wt% is present. On the contrary, in Class C fly ash, generally more than 20 wt% lime is present.

In addition, there are several artificially manufactured microparticles used for a variety of purposes. Although such microparticles tend to be more consistent and uniform in their makeup and structure, they also tend to be extremely expensive and cost prohibitive for many applications.

Of particular concern in many building structures is how well noise or sound travels through the partitions or walls of the building structure, whether these are interior or exterior walls. In most cases, it is desirable to keep sound transmission across partitions as minimal as possible. Therefore, the ability for structural partitions or walls to attenuate (e.g., absorb or scatter) sound is an important design consideration. Most building materials, such as insulation, some wallboard products, etc., are designed with some degree of sound attenuation or absorption properties in mind as it is often desirable to minimize, or at least reduce, the amount of sound transmission through a partition. With respect to building structures, building materials such as wallboard, insulation, and certain types of paint, are considered materials that can contribute to enhanced sound attenuation properties, or in other words, a reduction in sound transmission.

Wallboard is a common utility or building material, which comes in many different types, designs, and sizes. Wallboard can be configured to exhibit many different properties or characteristics, such as different sound absorption, heat transfer and/or fire resistance properties. By far, the most common type of wallboard is drywall or gypsum board. Drywall comprises an inner core of gypsum, the semi-hydrous form of calcium sulphate (CaS_{4'}½H₂O), disposed between two facing membranes, typically paper or fiberglass mats.

The most commonly used drywall is one-half-inch thick but can range from one quarter (6.35 mm) to one inch (25 mm) in thickness. For soundproofing or fire resistance, two layers of drywall are sometimes laid at right angles to one another. Drywall provides a thermal resistance, or R value, of 0.32 for 0.95 cm (three-eighths-inch) board, 0.45 for 1.27 cm (half inch), 0.56 for 0.625 cm (five-eighths inch) and 0.83 for 2.54 cm (one-inch board). In addition to increased R-value, thicker drywall has a slightly higher Sound Transmission Class (STC) rating.

STC, part of ASTM International Classification E413 and E90, is a widely used standard for rating how well a building material attenuates airborne sound. The STC number is derived from sound attenuation values tested at sixteen standard frequencies from 125 Hz to 4000 Hz. These transmission-loss values are then plotted on a sound pressure level graph and the resulting curve is compared to a standard reference contour. Acoustical engineers fit these values to the appropriate TL Curve (or Transmission Loss) to determine an STC rating. STC can be thought of as the decibel reduction in noise that a wall or other partition can provide. The dB scale is logarithmic, with the human ear perceiving a 10 dB reduction in sound as roughly halving the volume. Therefore, any reduction in dB is significant. The reduction in dB for the same material depends upon the frequency of the sound transmission. The higher the STC rating, the more effective the barrier is at reducing the transmission of most common sound frequencies.

Conventional interior walls in homes or buildings have opposing sheets of drywall mounted on a stud frame or stud wall. In this arrangement, with the drywall panels having a 1.27 cm (½ inch) thickness, the interior wall measures an STC of about 33. Adding fiberglass insulation helps, but only increases the STC to 36-39, depending upon the type and quality of insulation, as well as stud and screw spacing. As wallboard is typically comprised of several sheets or panels, the small cracks or gaps between panels, or any other cracks or gaps in the wall structure are referred to as "flanking paths," and will allow sound to transmit more freely, thus resulting in a lower overall STC rating. Similarly, the Outdoor-Indoor Transmission Class (OITC) is the widely used standard for indicating the rate of transmission of sound between outdoor and indoor spaces. OITC testing typically considers frequencies down to 80 Hz and is weighted more to lower frequencies.

EP 0475302 discloses a lightweight wallboard having a density in the range of 160 kg/m³ (10 pcf) to 480.5 kg/m3 (30 pcf) and comprised of a faced layer of expanded siliceous inorganic particles, such as expanded perlite, bonded together by inorganic binder, such as sodium silicate. The board is made by depositing a mixture of particles, binder and water onto a moving web of facing material, contacting the mixture with an upper moving web of facing material, compacting the mixture to the desired shape and density, a substantial number of the particles being broken, and drying the resulting board. Fire resistant and water repellent versions of the formula are also disclosed.

WO 2008/116188 discloses a utility material can include microparticles, an organic binder and an inorganic binder. The microparticles can be present in an amount from about 25 wt% to about 60 wt%, based on wet formulation. The inorganic binder can optionally include sodium silicate. The organic binder can optionally include a vinyl acetate. The utility material can be formed into a variety of different products or building materials, such as wallboard, shear panels. In addition, the building material may be particularly used to attenuate sound.

### SUMMARY OF THE INVENTION

In a first aspect of the present invention there is provided a method of forming a wallboard material, comprising:
forming a mixture including:
   from about 25 wt% to about 60 wt% of microparticles based on wet formulation,
   from about 20 wt% to about 36 wt% dry sodium silicate,
disposing the mixture between a first facing membrane and a second facing membrane; and
heat curing the mixture in a single step sufficient to form a wallboard material having the first facing membrane and the second facing membrane attached to a core matrix, said heat curing being completed in a time less than about 1.5 hours without causing damage to the wallboard material; and
   characterised in that the mixture further includes from about 2 wt% to about 6 wt% of a dry vinyl acetate; and
   wherein the first facing membrane is a metallic facing membrane.

In a further aspect of the present invention there is provided a method of improving drying time without causing damage to a wallboard material having a core matrix comprising greater than about 25 wt% microparticles based on wet formulation, greater than about 20 wt% dry sodium silicate, and greater than about 2 wt% of a dry vinyl acetate, said method comprising:
depositing a metallic facing membrane on at least one face of the core matrix material and exposing the wallboard material to a temperature profile sufficient to effectuate drying and curing of said core matrix within a duration of time between 0.5 and 3 hours.

In an additional aspect of the invention there is provided a wallboard material, comprising
a first facing membrane and a second facing membrane; and
a core matrix material disposed and cured between the first facing membrane and the second facing membrane comprising:
from about 25 wt% to about 60 wt% of microparticles based on wet formulation, the microparticles having a size of from about 10 to about 1000 microns,
from about 20 wt% to about 36 wt% dry sodium silicate; and
characterised in that first facing membrane is a metallic facing membrane and the core matrix further comprises from about 2 wt% to about 6 wt% of a dry vinyl acetate.

In light of the problems and deficiencies inherent in the prior art, the present invention seeks to overcome these by providing a utility material including a microparticle-based core matrix. The present disclosure describes a wallboard material having an improved water resistant, heat resistant, strength, Sound Transmission Class rating and other beneficial properties over conventional utility materials.

The wallboard material includes a core matrix having a plurality of microparticles, and an organic binder and an inorganic binder. The core matrix includes from about 25 wt% to about 60 wt% of microparticles based on wet formulation. A method of forming the wallboard material includes forming a mixture including microparticles, sodium silicate and vinyl acetate. The mixture is disposed between a metallic facing membrane and a second facing membrane. The mixture is then heat cured in a single step sufficient to form a wallboard material having the metallic facing membrane and the second facing membrane attached to a core matrix. The heat curing time is complete in less than about 1.5 hours without causing damage to the wallboard material.

There has thus been outlined, rather broadly, various features of the invention so that the detailed description thereof that follows may be better understood, and so that the present contribution to the art may be better appreciated. Other features of the present invention will become clearer from the following detailed description of the invention, taken with the accompanying claims, or may be learned by the practice of the invention.

### BRIEF DESCRIPTION OF THE DRAWINGS

The present invention will become more fully apparent from the following description and appended claims, taken in conjunction with the accompanying drawings. Understanding that these drawings merely depict exemplary embodiments of the present invention they are, therefore, not to be considered limiting of its scope. It will be readily appreciated that the components of the present invention, as generally described and illustrated in the figures herein, could be arranged and designed in a wide variety of different configurations. Nonetheless, the invention will be described and explained with additional specificity and detail through the use of the accompanying drawings in which:
FIG. 1 illustrates a perspective view of a wallboard building material in accordance with one exemplary embodiment of the present invention;
FIG. 2 illustrates a detailed partial perspective view of the wallboard building material of FIG. 1;
FIG. 3 illustrates a detailed partial perspective view of a wallboard building material in accordance with another exemplary embodiment of the present invention;
FIG. 4 illustrates a perspective view of a wallboard building material just prior to being installed or mounted onto a stud wall;
FIG. 5-A illustrates a detailed partial end view of a wallboard building material having a coupling system formed therein in accordance with one exemplary embodiment of the present invention;
FIG. 5-B illustrates a detailed partial end view of a wallboard building material having a coupling system formed therein in accordance with another exemplary embodiment of the present invention;
FIG. 6 illustrates a detailed perspective view of a wallboard building material in accordance with one exemplary embodiment of the present invention, wherein the building material comprises a microparticle-based core matrix, a multi-elevational surface configuration formed in one surface of the core matrix, and a facing sheet disposed on an opposing surface of the core matrix;
FIG. 7-A illustrates a detailed perspective view of a wallboard building material in accordance with another exemplary embodiment of the present invention, wherein the building material comprises a microparticle-based core matrix, a lath disposed or sandwiched within the core matrix, a multi-elevational surface configuration formed in one surface of the core matrix, and a facing sheet disposed on an opposing surface of the core matrix;
FIG. 7-B illustrates a detailed view of the building material of FIG. 7-A;
FIG. 8 illustrates a top view of a building material in accordance with still another exemplary embodiment of the present invention, wherein the building material comprises a patterned pillow-like multi-elevational surface configuration formed in the exposed surface of the core matrix;
FIG. 9 illustrates a cross-sectional side view of the building material of FIG. 8;
FIG. 10 illustrates a cross-sectional end view of the building material of FIG. 8;
FIG. 11 illustrates a detailed side view of the building material of FIG. 6;
FIG. 12 illustrates a detailed side view of a building material having a multi-elevational surface configuration in accordance with another exemplary embodiment;
FIG. 13 illustrates a detailed side view of a building material having a multi-elevational surface configuration in accordance with another exemplary embodiment;
FIG. 14 illustrates a cross-sectional side view of a building material in accordance with another exemplary embodiment, wherein the building material comprises a plurality of strategically formed and located cavities or voids;
FIG. 15 illustrates a building material configured for use as a finishing material on an exterior of a structure;
FIG. 16 illustrates a perspective view of a wood mold of for a bottom piece of a porous mold, in accordance with one aspect of the present invention; and
FIG. 17 illustrates a top view of a backing paper template, in accordance with one aspect of the present invention.

### DETAILED DESCRIPTION OF EXEMPLARY EMBODIMENTS

The following detailed description of exemplary embodiments of the invention makes reference to the accompanying drawings, which form a part hereof and in which are shown, by way of illustration, exemplary embodiments in which the invention may be practiced.

The following more detailed description of the embodiments of the present invention is not intended to limit the scope of the invention, as claimed, but is presented for purposes of illustration only and not limitation to describe the features and characteristics of the present invention, to set forth the best mode of operation of the invention, and to sufficiently enable one skilled in the art to practice the invention. Accordingly, the scope of the present invention is to be defined solely by the appended claims.

The following detailed description and exemplary embodiments of the invention will be best understood by reference to the accompanying drawings, wherein the elements and features of the invention are designated by numerals throughout.

The present invention describes a method of manufacturing a wallboard material. The method includes forming a mixture including microparticles, sodium silicate and vinyl acetate. The mixture is disposed between a metallic facing membrane and a second facing membrane. The mixture is then heat cured in a single step sufficient to form a wallboard material having the metallic facing membrane and the second facing membrane attached to a core matrix. The heat curing time is complete in less than about 1.5 hours without causing damage to the wallboard material.

The present invention also describes an improved method of drying wallboard material, and various wallboard materials. The composition of the core matrix comprises a plurality of hollow, inert, lightweight naturally occurring or synthetic microspheres that are substantially spherical in geometry (hereinafter "microspheres"), as well as at least one binder configured to adhere the microspheres together, and to form a plurality of voids present throughout the core matrix. Embodiments of the utility materials presented herein can comprise a plurality of microparticles that are at least bound or adhered together, and preferably bonded together, by a binder to create a matrix structure having a plurality of voids defined therein. The microparticles are interspersed and suspended in a composition, comprising at least the binder, and perhaps other ingredients, such as a surfactant or foaming agent. Depending upon the selected composition, the utility materials may be configured to exhibit certain physical and performance properties, such as strength, flexibility, hardness, as well as thermal and/or acoustical properties, fire resistant properties, etc. The core matrix may also comprise various additives, fillers, reinforcement materials, etc. Alternatively, the core matrix can be free from one or more of additives, fillers, and/or reinforcement materials. Each of the components of the present invention wallboard building material, as well as other features and systems, are described in greater detail below.

The wallboard material comprises a first facing membrane and a second facing membrane with a core matrix material disposed and cured between the two facing membranes. The core matrix material includes from about 25 wt% to about 60 wt% of microparticles based on wet formulation, where the microparticles having a size of from about 10 to about 1000 microns, from about 20 wt% to about 36 wt% sodium silicate, and from about 5 wt% to about 15 wt% of a vinyl acetate, wherein the first facing membrane is a metallic facing membrane.

The presently disclosed utility material, associated wallboard embodiments, and associated methods of making and using such utility materials provide several significant advantages over prior related utility materials, such as, e.g., wallboard products, and particularly drywall, some of which are recited here and throughout the following more detailed description. First, the wallboard building material provides enhanced thermal properties. For example, in one aspect, the wallboard building material provides a much greater resistance to thermal heat transfer. Second, in another aspect, wallboard building material provides enhanced acoustical properties. For example, the wallboard building material disclosed herein provides a significantly better Sound Transmission Class (STC) rating. Third, the present invention wallboard building material is stronger and lighter than standard drywall material.

Utility materials, as disclosed herein, are highly adaptable to a variety of applications. Utility materials, due to their composition or makeup, can be manipulated to achieve different performance characteristics depending upon the intended application for use. For example, it is possible to control the porosity and density of the microparticles to achieve any level desired. This is useful in many applications, such as when a sound or thermal insulating utility material is desired.

In one aspect, the utility materials may be fabricated to comprise a flowable, flexible and/or semi-rigid state. Additionally, the utility materials may be configured to provide enhanced thermal insulation, fire resistance, acoustical insulation, mold retardant and/or other desirable properties. The utility materials can provide enhanced filtering abilities. Furthermore, by varying the number, size, composition, and/or shape of microparticles, the binder material, the ratio of microparticles to binder and other optional components (e.g., surfactant), the processing steps and parameters, and other variables, different utility materials may be formed or created that exhibit different physical characteristics or properties, and that perform in different ways.

In one aspect, the utility material can include rigid utility or building materials, such as wallboard or shear panels, formulated using a plurality of microparticles. The present invention also describes various methods used to produce or fabricate different types of utility or building materials, as well as various applications for such. In general, the utility or building materials of the present invention comprise a plurality of microparticles that are at least bound or adhered together, and preferably bonded together, by one or more binders to create a core matrix structure having a plurality of voids defined therein. Depending upon the selected composition, the building materials may be configured to exhibit certain physical and performance properties, such as strength, flexibility, hardness, as well as thermal and/or acoustical properties, fire resistant properties, etc.

The composition of the core matrix comprises a plurality of hollow, inert, lightweight naturally occurring or synthetic microspheres that are substantially spherical in geometry (hereinafter "microspheres"), as well as at least one binder configured to adhere the microspheres together, and to form a plurality of voids present throughout the core matrix. The binder may comprise an inorganic binder solution, an organic or latex binder solution, or both of these in combination. The core matrix may also comprise various additives, fillers, setting agents, reinforcement materials, etc. Alternatively, the core matrix can be free from various additives and/or fillers and/or setting agents and/or reinforcement materials. In one aspect, the core matrix can be free from fibrous materials. In another aspect, the core matrix can be free from cementing agents, such as various forms of cement. In a further embodiment, the core matrix can be free from lime.

The present invention building material provides several significant advantages over prior related building materials, some of which are recited here and throughout the following more detailed description. First, the present invention building materials are highly adaptable to a variety of applications. For example, depending upon how they are configured, the building materials may be used as wallboard, shear panels, sound boards, stucco boards, and any combination of these. Second, the present invention building materials, due to their composition and/or makeup, can be manipulated to achieve different performance characteristics depending upon the intended application for use. For example, it is possible to control the porosity and density of the microparticles to achieve any level desired. This is useful in many applications, such as when a sound or thermal insulating utility material is desired. Third, the building materials may be configured to provide enhanced thermal insulation, fire resistance, acoustical insulation, mold retardant and other desirable properties. For example, the present invention building materials provide significantly better Sound Transmission Class (STC) ratings.

In addition, the present invention building materials may be used with other similar building materials to create and define a sound trap much more capable of attenuating sound than a walled structure formed of drywall. Other advantages include enhanced resistance to heat transfer, and strong, lightweight materials. Fourth, the building materials provide enhanced filtering abilities. Fifth, by varying the number and size of microparticles, the binder material, the ratio of microparticles to binder (and other components (e.g., surfactant)), and other parameters, different building materials may be formed or created that exhibit different physical characteristics or properties, and that perform in different ways. Sixth, the building materials, in one aspect, may comprise a multi-elevational surface configuration formed in one surface of the core matrix that enhances the sound attenuation properties of the building material.

Each of the above-recited advantages will be apparent in light of the detailed description set forth below, with reference to the accompanying drawings. These advantages are not meant to be limiting in any way. Indeed, one skilled in the art will appreciate that other advantages may be realized, other than those specifically recited herein, upon practicing the present invention.

In describing and claiming the present invention, the following terminology will be used in accordance with the definitions set forth below.

The singular forms "a," "an," and, "the" include plural referents unless the context clearly dictates otherwise. Thus, for example, reference to "a wallboard" includes reference to one or more of such wallboards, and reference to "the binder" includes reference to one or more of such binders.

As used herein, "substantially" refers to situations close to and including 100%. Substantially is used to indicate that, though 100% is desirable, a small deviation therefrom is acceptable. For example, substantially free of mold includes situations completely devoid of mold, as well as situations wherein a negligible amount of mold is present, as determined by the particular situation.

As used herein, the term "about" is used to provide flexibility to a numerical range endpoint by providing that a given value may be "a little above" or "a little below" the endpoint.

For purposes of discussion and interpretation of the claims as set forth herein, the term "building material," as used herein, shall be understood to mean various types of products or materials incorporating a matrix of microparticles (e.g., microspheres) adhered or bound together using one or more components, such as a binder of some kind. The building materials may comprise other additives, components or constituents, such as setting agents, foaming agents or surfactants, water soluble polymers, and others. The building materials may comprise many different types, embodiments, etc., and may be used in many different applications.

The term "microparticle," as used herein, shall be understood to mean any naturally occurring, manufactured, or synthetic particle having an outer surface, and in some cases, a hollow interior. Generally, the microparticles referred to herein comprise a spherical or substantially spherical geometry having a hollow interior, known as microspheres. Other types of microparticles may include those made from wood, ground rubber, ground up plastic, sawdust, etc.

The term "core matrix," as used herein, shall be understood to mean the combination of microparticles and other constituents used to form the support matrix of the building materials. The microparticles may be combined with one or more binders, additives, setting agents, etc.

The term "multi-elevational" shall be understood to describe at least one surface of the core matrix of the building material, wherein the surface has formed therein a series of peaks and valleys (or protrusions and recesses) to provide an overall surface configuration having different surfaces located in different elevations and/or orientations. The multi-elevational surface configuration may be arbitrarily formed or patterned. In addition, the multi-elevational surface may be defined by any arbitrary or geometrically shaped protruding and recessed components.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc.

This same principle applies to ranges reciting only one numerical value. Furthermore, such an interpretation should apply regardless of the breadth of the range or the characteristics being described.

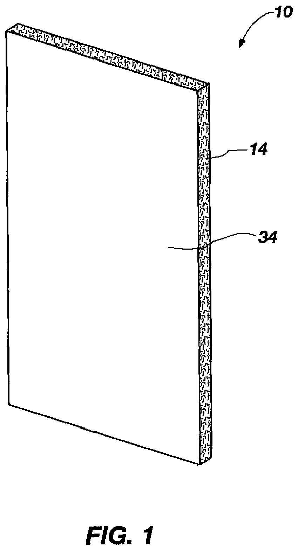

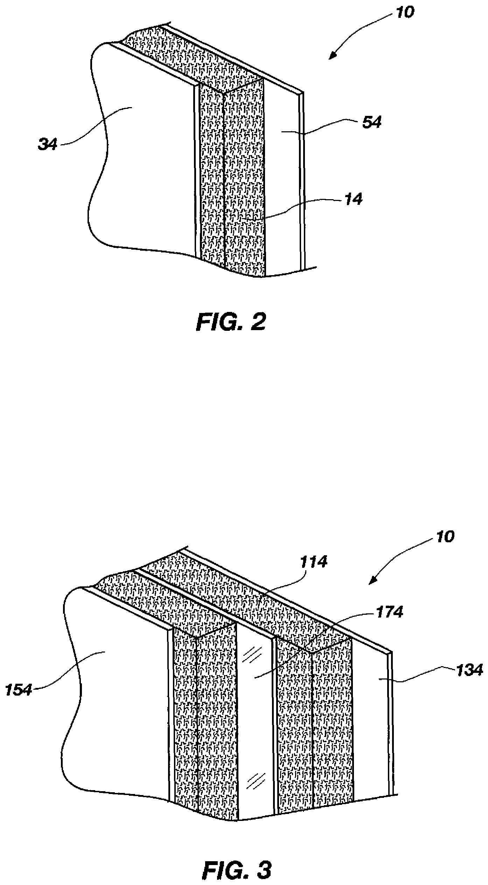

With reference to FIGS. 1 and 2, illustrated is a general perspective view and a detailed perspective view, respectively, of a wallboard building material in accordance with one exemplary embodiment of the present invention. As shown, the wallboard building material 10 is in panel form having a size of approximately 122 cm (4 ft.) in width, and 244 cm (8 ft. in length), and approximately 1.27 cm (½ inch thick), which is the same size as most conventional wallboard products. Of course, other sizes such 122 cm (4 ft.) by 366 cm (12 ft.) sizes, as well as different thicknesses is also contemplated. The wallboard building material 10 is shown as comprising a core matrix 14 disposed between opposing facing sheets or layers, namely first facing membrane 34 and second facing membrane 54.

The core matrix 14 is comprised primarily of a plurality of microspheres and at least one binder, wherein the microspheres are at least bound or adhered together, and preferably bonded together, by the one or more binders to create a core matrix structure having a plurality of voids defined therein. The voids are formed from the point to point contact between the microspheres.

The microspheres contemplated for use herein may comprise many different types, sizes, shapes, constituents, etc. Although not limited to this, the microspheres used in the present invention wallboard building material will generally have a size ranging between 10 and 1500 microns, or between 10 and 1000 microns, and at times preferably between 200 and 800 microns. The bulk density of the microspheres is generally 0.4 - 0.6 g/ml, providing products that are much lighter than conventional wallboard building materials, such as gypsum-based drywall. The size of the microspheres will depend upon the application and the performance characteristics desired. However, the particles should not be too large so as to cause any binder disposed thereon to run off or to not be effective. The size of the microspheres will also function to influence the permeability of the wallboard building material.

With reference to FIG. 3, the wallboard building material may further comprise a reinforcing member operable with the core matrix configured to provide enhanced characteristics in one or more areas as compared with the exemplary wallboard building material of FIGS, 1 and 2. In the exemplary embodiment shown, the wallboard 110 comprises similar components as discussed above with respect to the wallboard 10 of FIGS. 1 and 2, only the wallboard 110 comprises an additional reinforcing member 174 disposed within the core matrix 114 (sandwiched therein), Reinforcing member 174 is configured to reinforce or enhance one or more properties or characteristics of the wallboard 110. For example, the reinforcing member 174 may be configured to reinforce against (or improve the resistance of) sound transmission, heat transfer or a combination of these. The reinforcing member 174 may also be configured to enhance the overall strength of the wallboard building material 110.

The reinforcing member 174 may comprise various types of materials, such as metals, woven or nonwoven fibers or fiber sheets, plastic films, etc., and may comprise any necessary thickness. In the exemplary embodiment shown, the reinforcing member 174 comprises an aluminum material disposed within the core matrix.

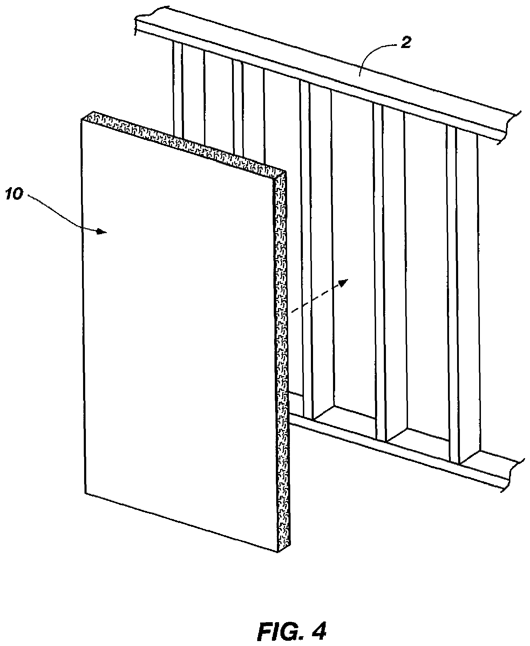

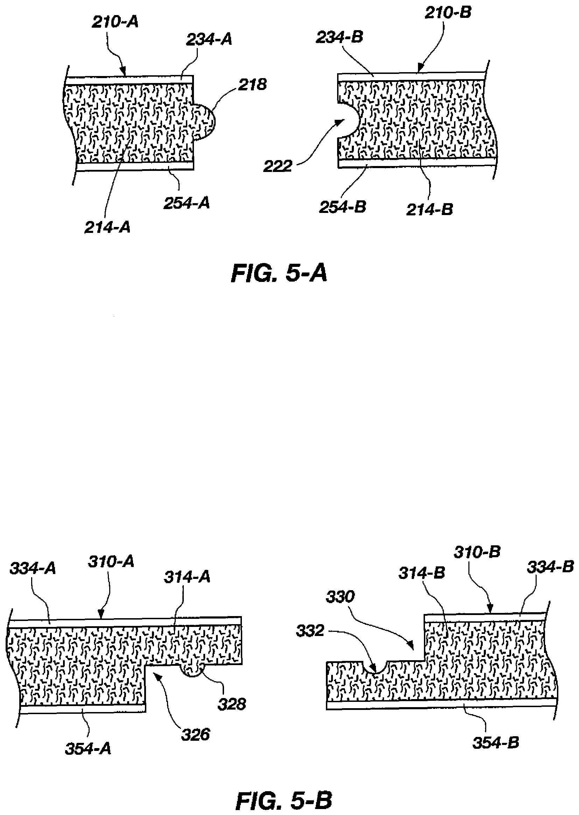

With reference to FIG. 4, illustrated is a wallboard building material 10, formed in accordance with one exemplary embodiment of the present invention, just prior to being installed on or hung from a stud wall 2. Specifically, wallboard building material 10 comprises the same components as that of FIGS. 1 and 2. It should be noted that no specialized installation techniques are required for installing or hanging the wallboard building material 10. The wallboard building material 10 may be installed in a similar manner as conventional drywall or other similar products. However, FIGS. 5-A and 5-B illustrate other exemplary embodiments of wallboard building materials that may require one or more special installation techniques. These embodiments are discussed in detail below.

With reference to FIGS. 5-A and 5-B, illustrated are two different examples of coupling and sealing systems, each one being incorporated into a present invention wallboard building material, and each one being configured to couple adjacent wallboard panels together, and to seal or at least partially seal (e.g., not necessarily a strictly airtight seal) the adjacent wallboard panels. The coupling and sealing system is intended to reduce and/or eliminate the flanking path between the adjacent wallboard panels at the joint. The seal may be further enhanced or improved upon nailing, screwing or otherwise securing the joint to a stud in a stud wall. Indeed, the overlap shown is intended to be positioned about a stud, but this may or may not always be possible. The seal functions to resist sound transmission through the joint, and also to resist heat transfer through the joint, by creating a more complex flanking path for heat transfer and sound transmission. In other words, the flanking path is intended to be reduced and/or eliminated if possible by the coupling and sealing system of the present invention.

With specific reference to FIG. 5-A, illustrated are partial end views of a first wallboard building material 210-A and a second wallboard building material 210-B, each one formed in a manner as described herein. The first wallboard building material 210-A comprises a protruding or male configuration 218 formed within and along an edge of the core matrix 214-A, which is intended to align and mate with a corresponding recess or female configuration 222 formed within and along an edge of the core matrix 214-B of the second wallboard building material 210-B. The coupling or connection is designed to secure the first and second wallboard building materials 210-A and 210-B, respectively, in a proper position with respect to one another, and to permit the edges of the membranes 234-A and 254-A of the first wallboard building material 210-A to meet the membranes 234-B and 254-B of the second wallboard building material 210-B. The coupling system further helps to maintain proper positioning after installation. The coupling system may be formed about any of the edges of the wallboard building material.

FIG. 5-B illustrates partial end views of a first wallboard building material 310-A and a second wallboard building material 310-B, each one formed in a manner as described herein. The first wallboard building material 310-A comprises a notch 326 formed within and along an edge of the core matrix 314-A, with the surface parallel to the surface of the membranes 334-A and 354-A optionally comprising a nub 328, also formed from the core matrix 314-A. The notch 326 is intended to align and mate with a corresponding notch 330 formed in the second wallboard building material 310-B to couple together the first and second wallboard building materials. The notch 326 optionally comprises a recess 332 that receives nub 328 therein when the first and second wallboard building materials are secured or coupled to one another. The coupling system shown in FIG. 5-B is intended to perform a similar function as the coupling system shown in FIG. 5-A.

It is noted that the coupling system is integrally formed into the core matrix during manufacture of the wallboard building material. The unique composition of the core matrix provides this capability. The particular size, shape or configuration of the coupling system may vary, and may be formed in accordance with various different manufacturing techniques.

It also contemplated that one or more sealing members or adhesives may be applied to the coupling system to enhance the sealing function achieved by coupling the two wallboard panels together.

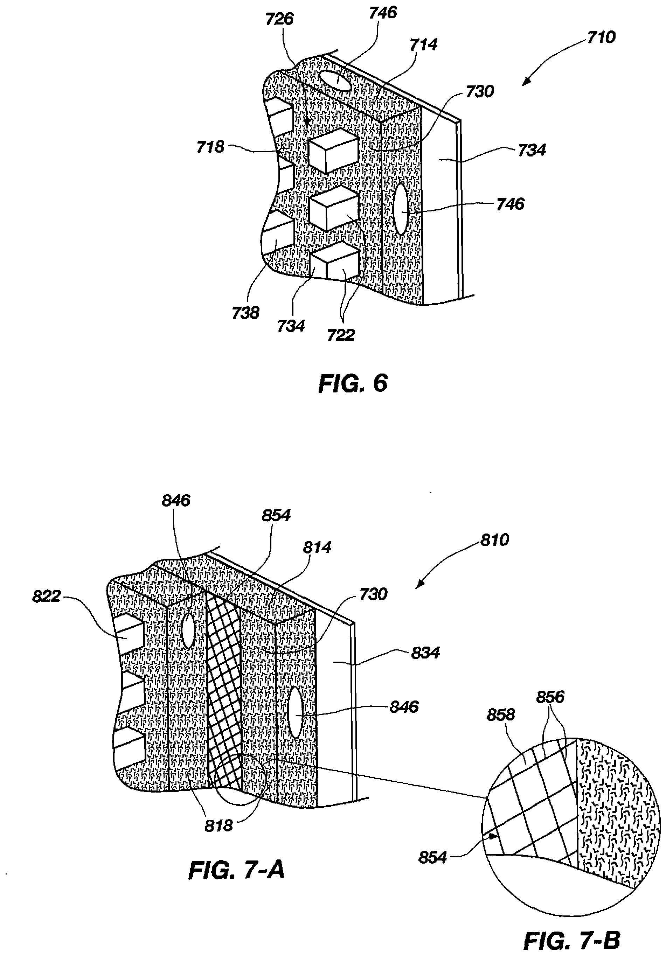

With reference to FIG. 6, illustrated is a detailed perspective view of a wallboard building material formed in accordance with one exemplary embodiment of the present invention. This particular wallboard building material embodiment is intended to be and is similar in many respects to the various wallboard building material embodiments described in related copending U.S. Provisional Patent Application No. 60/961,130, filed July 17, 2007, and entitled "Wallboard Building Material".

As noted, a method of forming a wallboard material includes forming a mixture including microparticles, sodium silicate and vinyl acetate. The mixture is disposed between a metallic facing membrane and a second facing membrane. The mixture is then heat cured in a single step sufficient to form a wallboard material having the metallic facing membrane and the second facing membrane attached, adhered, bonded, or otherwise secured to a core matrix. The heat curing time is completed in less than about 1.5 hours without causing damage to the wallboard material. In one aspect, the method can be free from additional steps in-between the mixing, deposition, and heat curing steps; meaning, the components are mixed, including water, immediately deposited between facing membranes, and immediately sent into a dryer. In one aspect, the wallboard can be cut before and/or after heat curing. In a further aspect, one or more leveling rollers can be utilized during the heat curing step to maintain a desired shape and level to the wallboard. In a semi-rigid, molded state, the microparticles and binder and any other components are pre-mixed together in such a way so as to form a semi-rigid utility material. The microparticles are caused to dry or harden, as well as to bond via the binder. In one aspect, the pre-mixed composition may then be placed into a mold and formed into a desired size and shape in accordance with one or more molding methods, examples of which are described below.

In another aspect, the pre-mixed composition may be deposited or disposed onto a surface, such as a moving conveyor, and then cut or otherwise formed into the desired size and shape, either before or after heat curing.

The utility materials formed to comprise a semi-rigid makeup may be formed into panels of different size, shape and thickness, such as panels that function as and that have physical characteristics comparable to conventional wallboard. Various backing or containing members may be utilized to support or provide a barrier to the composition. The density of the wallboard building material having the core composition just described can be between 0.4 g/ml and 0.6 g/ml.

Upon heat curing, the water content of the wallboard material is less then 5%, and can be less than 1%. As noted, the time to heat cure a wallboard material, particularly a wallboard material having a thickness of about 1.27 cm (½ inch), can be less than about 1.5 hours, and can be as low as between 35 and 60 minutes.

In one aspect, the wallboard material can be heated at 316° - 371° C (600° - 700° F) for up to 10 minutes, and reducing the temperature on a ramp scale to between 121° - 177° C(250° - 350°) for 30-50 minutes. If the heating is too high or maintained for too long at a high temperature, steam pockets form that can cause delamination of the material. By including the metallic facing membrane, the duration at elevated temperature can be increased without causing steam pockets that cause harm to the core matrix.

Similarly, a method of improving or reducing drying time without causing damage to a wallboard material includes using a metallic facing membrane on at least one face of the wallboard material and elevating the temperature of a drying time. In a specific aspect, the metallic facing membrane can comprise or consist essentially of aluminum. Other metallic membranes can be utilized such as those metals or metal alloys having similar characteristics to or different characteristics than aluminum. Non-limiting examples include tin and steel. In further embodiments, the use of a metallic membrane can allow longer duration of heat curing at elevated temperatures (at or near 260° C (500 degrees F) to about 316° (600 degrees F), without forming large steam pockets that cause delamination of the wallboard. By utilizing a metallic facing membrane, the temperature for heat curing can be elevated without damaging the wallboard material, which in turn reduces the heat curing time of the wallboard material.

Reducing the drying time as described herein greatly improves the efficiency in manufacturing, reduces the overall costs and time associated with forming wallboard. Typically, drying materials of the core matrix can take hours and even days to fully heat cure a wallboard. Accelerated drying cannot be achieved by adding unwanted accelerants due to a reduction of the integrity of the core matrix. Furthermore, accelerated drying by elevated temperature is likewise prohibited as higher temperatures tend to cause degradation and damage to the components of the wallboard including facing membranes and the core matrix. However, by including a metallic facing membrane, the higher temperatures can be achieved without damage and/or degradation to the wallboard materials. Furthermore, the higher temperatures reduce curing time and thus reduces overall manufacture time and required energy and storage expenses. Such improvement can be done without the aid of additives that can reduce the efficacy and integrity of the core matrix.

In one aspect, the drying time is reduced by at least about half of the time for a similar wallboard material having two paper facing membranes.

Indeed, the utility materials of the present invention may further comprise one or more facing sheets of material disposed on each side of the microparticle and binder composition. In another aspect, a mesh support material may be used, or a combination of a mesh and facing sheet may be used.

In a flexible state, the microparticles and binder and other components are again pre-mixed, but in a way so as to provide a more pliable or workable utility material that may be rolled up or folded upon itself and cut or otherwise divided onsite. The compositions making up a flexible utility material may comprise different types of binder, at least one of which maintains a degree of pliability or flexibility upon being either cured or cross-linked. This particular embodiment is intended to function similar and provide physical characteristics comparable to rolled insulation.

In a flowable embodiment, the microparticles and binder may be combined with a surfactant or foaming agent in order to reduce the water content in the composition, and thus the weight of the material. The composition may be pre-mixed and then whipped or agitated to activate the foaming agent. The bonding of the microparticles may be caused to occur after the composition has been applied to a surface. There are several options for providing a flowable utility material incorporating microparticles.

In one aspect, the components of the composition may be pre-mixed and caused to exist in a flowable state. More specifically, the composition may be caused to exist in a pumpable and sprayable state, wherein the material may be deposited onto or applied to a surface using a spray device, such as that used to spray stucco. In this embodiment, a water-based binder will most likely provide the desired properties that will enable the material to exist in a flowable state, and to be pumped from a pump source to the spray device, and ultimately through a nozzle. Non-aqueous compositions may also be used to produce a flowable composition. The composition may be dispensed prior to drying, or after drying, wherein the composition is broken up into pieces and dispensed, such as to provide a blown-in insulation.

In a second aspect, the components of the composition may be pre-mixed and also caused to exist in a flowable state, wherein the composition is caused to be more viscous than one to be pumped and/or sprayed. In a more viscous state, the composition may be manually spread onto a surface using one or more types of tools. Both water-based and non-water based binders may be used.

In a third aspect, the components of the intended composition may be separated from one another, and then mixed in a mixing chamber in a spray device, or in air as dispensed from the nozzle of the spray device. In this embodiment, there is no pre-mixing of the components of the composition. For example, the microparticles may be contained in one container, with the binder and surfactant each in another chamber. These could be brought together in a mixing chamber in a spray device and then dispersed upon mixing. Both aqueous-based or non-aqueous-based binders may be used.

In a fourth aspect, a percentage of the total microparticles to be present within the finished material may be pre-coated with an A side of a reactive component, and the remaining microparticles pre-coated with a B side of the reactive component. These may then be brought together and caused to react and bond or adhere together.

Utility materials can exist in a variety of forms. Much discussion herein is directed to the specific embodiment of wallboard. However, it should be noted that the principles, compositions, and methods discussed apply to a variety of forms of utility materials, and should be interpreted as such.

As shown in FIG. 6, the building material 710 is in panel form, similar to a wallboard panel, having a size of approximately 122 cm (4 ft.) in width, and 244 cm (8 ft.) in length, which is the same size as most conventional wallboard products. Of course, other sizes such 122 cm (4 ft.) by 244 cm)8 ft. sizes, as well as different thicknesses is also contemplated. The building material 710 is shown as comprising a core matrix 714 disposed about a single facing sheet or layer, namely facing membrane 734. The other side 718 of the building material 710 is exposed, or rather the other side of the core matrix 714 is exposed, thus exposing a portion of the configuration of microparticles and binder. The exposed surface of the core matrix provides and defines a rough, porous surface that is designed and intended to better attenuate sound. The exposed side 718 of the core matrix 714 is intended to face inward as the building material is installed or mounted to a structure, such as a stud wall, with the facing membrane 734 facing out.

The core matrix 714 is comprised primarily of a plurality of microspheres and at least one binder, wherein the microspheres are at least bound or adhered together, and preferably bonded together, by the one or more binders to create a core matrix structure having a plurality of voids defined therein. The voids are formed from the point to point contact between the microspheres as secured in place by the binder. The microspheres, as bonded together, provide a significantly more rough surface than if the building material were to comprise an additional facing membrane. The presence of a rough, porous surface functions to significantly improve the sound attenuation properties of the building material by being able to better absorb sound as it attempts to pass through the core matrix. Providing an exposed, rough, porous surface prevents sound from bouncing or deflecting off the building material, but rather permits the sound to penetrate the core matrix where it is quickly and efficiently absorbed.

The microparticles contemplated for use herein may comprise many different types, sizes, shapes, constituents, etc. Although not limited to this, the microparticles used in the present invention building material will generally have a size ranging between about 10 and about 1500 microns, or between about 10 and 1000 microns, and preferably between about 200 and about 800 microns. In a specific embodiment, the microparticles have a size ranging from about 300 to about 600 microns. In another aspect, the microspheres can have an average mean particle size of about 350 microns to about 450 microns. The microspheres or microparticles can optionally have a bulk density of about 0.4 to about 0.6 g/ml, providing products that are much lighter than conventional building materials, such as gypsum-based drywall or oriented strand board (OSB). The size of the microparticles will depend upon the application and the performance characteristics desired. However, the particles should not be too large so as to cause any binder disposed thereon to run off or to not be effective. The size of the microparticles will also function to influence the permeability of the building material. The microparticles are intended to be compatible with any binders, additives, and/or facing sheets. The shell thickness of the microparticles may be kept to a minimum amount, provided the microparticles maintain structural integrity as desired in the core matrix material. In one aspect, the microparticles can have a shell thickness of less than about 30% of the diameter of the microparticle. Wherein the microparticles are not spherical, the diameter of the particle can be calculated based on the effective diameter of the particle, using the total area of the cross section of the particle and equating such area to a circumferential area and determining the diameter from that value. In a further embodiment, the shell thickness can be less than about 20 % of the diameter of the microparticle.

In one exemplary embodiment, the microspheres may comprise hollow, inert, lightweight naturally occurring, glass particles that are substantially spherical in geometry. One particular type is sold under the trademark Extendospheres™, which are manufactured and sold by Sphere One Corporation. A hollow interior is preferred as this will reduce the weight of the building material, as well as provide good insulating properties. Furthermore, in one aspect, the microspheres or microparticles maintain structural integrity and retain their hollow nature, or original formation to the exclusion of binder or other matrix materials infiltrating the hollow portions of the microspheres. In one aspect of this embodiment, the microspheres may comprise the naturally occurring hollow, inert, glass microspheres obtained from a fly ash byproduct, which microspheres are often referred to as cenospheres. These cenospheres may be separated from the other byproduct components present in the fly ash and farther processed, such as to clean and separate these into desired size ranges. Cenospheres are comprised primarily of silica and alumina, and have a hollow interior that is filled with air and/or other gasses. They possess many desirable properties, such as a crush strength between 20.7 and 34.5 MPa (3000 and 5000 psi), low specific gravity and are able to endure extremely high temperatures (above 982° C (1800° F)). Although they are substantially spherical in overall shape, many are not true spheres, as many are fragmented, or comprise unsmooth surfaces caused by additional silica and/or alumina.

As noted, microparticles or microspheres can include an amount of air or other gasses within the hollow interior. Where possible, the composition of the gaseous material within the microsphere can optionally be selected so as to provide enhanced characteristics of the utility material. For example, the hollow interior can include a noble gas, such as argon, or other known insulating gasses, to improve the insulating properties of the overall utility material.

In another exemplary embodiment, the microspheres may comprise artificial hollow, spherical structures manufactured from a synthetic material. The advantage with having a synthetic material is the uniformity and consistency between microspheres, thus making their behavior and the behavior of the resulting core matrix and building material more predictable. However, these advantages may not be significant enough to justify their use, as synthetic microspheres are extremely expensive to manufacture and can be cost prohibitive in many applications. The use of naturally occurring microspheres over synthetic ones to form a building material may depend on several different factors, such as the intended application, and/or the desired performance properties or characteristics. In some applications, naturally occurring microspheres may be preferred while in others a synthetic type may be more desirable. In one aspect, however, a combination of naturally occurring microspheres and synthetic microspheres can be utilized together in the core matrix. The combination of microspheres can be a homogeneous or heterogeneous distribution throughout the utility material.

Microspheres are present in an amount between 25 and 60 percent by weight of the total core matrix, in wet mixture form. Preferably, the microspheres are present in an amount between about 30 and 40 percent by weight. Other amounts are further contemplated in the event other additives or fillers, such as perlite, or setting agents, such as Class C fly ash, are made part of the core matrix composition. It should be noted that fly ash, of any type, can be utilized as a filler material, and/or optionally as a source of cenospheres. In one aspect, Class C fly ash can be one or the only source of microspheres. Class C fly ash can, in one aspect, be included in a core matrix in an amount ranging from about 0.5 wt% to about 50 wt%. In one aspect, it can be present in combination with synthetically made microspheres at a ratio of Class C fly ash to synthetic microspheres of about 1:15 to about 15:1. In a further embodiment, Class C fly ash can be present in an amount of less than about 1/3 of the amount of microspheres. The Class C fly ash used can optionally include greater than about 80 wt% calcium aluminum silicates, and less than 2 wt% lime.

The present invention further comprises one or more binders operable to couple together the microspheres, and to facilitate formation of the porous core matrix. The microparticles or microspheres can be bound by any manner, including a physical cementing arrangement, chemically binding microspheres, merging boundaries of microspheres, etc. In a specific embodiment, the microspheres can be bound by a physical cementing arrangement, as held together in a matrix of binder, wherein the binder adheres or physically immobilizes the microspheres, but does not form covalent or other chemical bonding with the microspheres. The binder may be caused to adhere the microspheres together, wherein the binder is allowed to dry if water based, or cured in a high temperature environment if non-water based. In another aspect, the binder may be caused to be cross-linked, wherein the binder functions to bond the microspheres together to improve the water resistant properties of the building material.

The ratio of binder to microspheres may vary depending upon the building material to be formed. A higher ratio of binder to microspheres will result in a building material that is more solid and dense than one with a smaller ratio. Indeed, a smaller ratio of binder to microspheres will result in a more porous building material.

The present invention contemplates the use of many different types of binders, again depending upon the desired type of building material to be formed. Different binders may be selected as part of the composition to contribute to the makeup of the resulting building material and to help provide the building material with certain physical and performance properties.

Both aqueous (or water)-based and non-aqueous-based binders are contemplated for use. Any one of these may be used alone or in combination with another binder. Examples of general binder categories include, but are not limited to, thermoplastics, epoxy resins, curatives, urethanes, thermosets, silicones, and others.

The binder comprises an inorganic binder, which is sodium silicate combined with an organic binder such as polyvinyl acetate copolymer or ethylene vinyl acetate. The ratio of these binders may vary. In one aspect, the ratio of inorganic binder to organic binder may be about 7:1 to about 10:1. The inorganic binder is present in an amount between 50 and 60 percent by weight of the total weight of the core matrix (or about 20 to about 36 wt% dry inorganic binder), in wet form (the binders comprise an amount of water, or are mixed with an amount of water), with the organic binder present in an amount between 5 and 15 percent by weight of the total weight of the core matrix, in wet form (or about 2 to about 6 wt% dry organic binder). The listed amounts can be based on the pure forms of the binder material (with the percent weight of the binders in the total core matrix discussed herein being reduced between 40 and 60 percent), e.g. on pure sodium silicate, or can be based on binder mixtures including optionally water, similar chemical forms, e.g. silicates, silicic acid salts, etc., and other additives. As a non-limiting example, a sodium silicate binder solution commercially sold includes from about 35 wt% to 40 wt% sodium silicate in solution. Furthermore, more than one type of inorganic and/or organic binder can be utilized simultaneously.

In a specific embodiment, the core matrix composition can contain between 400 g and 600 g of microspheres, mixed with between 600 g and 800 g of sodium silicate binder solution, and between 60 g and 100 g of ethylene vinyl acetate. Of course, other ranges are possible, depending upon the application. For example, it may be desirable to have between 200 g and 1500 g of sodium silicate or other binder mixed with between 300 and 800 g of microspheres, mixed with between 20 g and 180 g of ethylene vinyl acetate copolymer. Other ratios and ranges of each of the components of various compositions are contemplated. Furthermore, more than one organic binder could be used, as could more than one inorganic binder.

In a specific example, the inorganic binder solution can be present in an amount about 55.5% by weight of the total weight of the core matrix in wet mixture, with the binder solution comprising sodium silicate and water. More specifically, the inorganic binder solution comprises sodium silicate present in an amount between 40% and 60% by weight and water present in an amount between 40% and 60% by weight. In many cases, the inorganic binder solution will comprises a 1:1 ratio of sodium silicate to water. The sodium silicate may be pre-mixed and the solution provided in liquid, or the sodium silicate may be in powder form and subsequently mixed with water.

In one aspect, the latex or organic binder can be present in an amount about 7.4% by weight of the total weight of the core matrix in wet mixture, and comprises an ethylene polyvinyl acetate (EVA) emulsion. The latex binder facilitates formation of a flexible, porous composition that is subsequently formed into the core matrix of the wallboard. One particular example of latex binder used is ethylene vinyl acetate (water-based binder) sold under the trademark Airflex (e.g., Airflex 420), which is manufactured and sold by Airproducts, Inc. This particular binder is used to facilitate the flowable and formable formation of the core matrix, as well as to provide either flexible or semi-rigid compositions. The latex binder can be pre-mixed with water to be in liquid form. The latex binder comprises EVA present in an amount about 40% by weight, and water present in an amount about 60% by weight. In one aspect, the latex binder can range from about 2.5 wt% to about 30 wt% of the total weight of the core matrix in wet mixture. In a further aspect, the latex binder can range from about 5 wt% to about 20 wt%. Non-limiting examples of latex binders include those produced by Airflex (including specifically 323, 401, 420, 426), those produced by UCAR (specifically 154s, 163s), conventional glues and pastes, those produced by Vinac (including XX210), and mixtures and combinations thereof.

Optionally, water soluble polymers can be included in the core matrix formulation. The water soluble polymer may be added to the core matrix composition already dissolved in water or in dried form. The function of the water soluble polymer is to serve as a stabilizer for any surfactant or foaming agent present in the mixture. Specifically, the water soluble polymer helps to stabilize the composition until the binder is either cured or cross-linked. Non-limiting examples of water soluble polymers that can be included in the formulation include those distributed by Airflex, such as polyethylene oxide, such as, e.g., WSR 301. The water soluble polymer can also function as a thickener and prevent the water from running out. Such polymers can be useful to control the stiffness, flexibility, tear strength, and other physical properties of the building material, as well as to stabilize any surfactants, if present. In some embodiments, it may be desirable to eliminate, or at least significantly reduce, the amount of organic components in the core matrix composition. This is particularly the case in the event it is desirable that the building material comprise more enhanced fire resistant properties. The amount of organic components remaining in the core matrix composition, therefore, may be dependent upon the particular application.

As mentioned, depending upon the type used, the binder may be simply cured, with no cross-linking, or it may be caused to polymerize or cross-link. By cross-linking the binder(s), a stronger more permanent physical coupling occurs among the binder, thus better physically securing the microspheres. As such, the present invention contemplates using one or more means to effectively cross-link the binders. In one exemplary embodiment, the binders may be cross-linked by elevating the temperatures of the binders to a suitable temperature for a suitable period of time to effectuate polymerization and bonding. This may be done using conventional radiant heating methods, or it may be done using microwaves applied continuously or at various intervals, as well as with microwaves of different intensities. Using microwaves is significantly faster, and much more cost effective. In addition, cross-linking with microwaves may produce a stronger building material as the amount of binder actually cross-linked may be increased. Depending on the binders used, it may be useful to add a limited amount of cross-linking agent to the binder formula in order to increase and/or control the cross-linking.

Cross-linking within a building material provides significant advantages over a building material having a composition that is not cross-linked. For example, with cross-linking, the binders are generally stronger, they do not absorb water as easily, and the connection between microspheres is much stronger. In addition, the building material does not weaken over time. Other advantages may be realized by those skilled in the art. Having said this though, there may be applications where cross-linking is not preferred, and where a non-bonded composition is better suited. This, of course, is contemplated herein.

The present invention further contemplates optionally utilizing a surfactant or foaming agent, mixed with the binder and the microspheres to achieve a building material having a relatively low density. With respect to a foaming process, once ingredients are combined, they may be whipped or agitated to introduce air into the mixture, and then dried. Mechanical agitation or compressed air may be used to physically introduce air into the mixture and to create the foaming process. The foaming process effectively causes microspheres to be supported in a much more separated position with respect to one another as compared to a non-foamed composition. With the presence of the foam, the microspheres suspended and are able to dry in more dispersed configurations. In another aspect, the suspension of the microspheres due to the presence of the foaming agents may also function to make certain core matrix compositions more flowable or pumpable, as well as more formable.

Non-limiting examples of surfactants or foaming agents include, anionic foaming agents, such as Steol FS406 or Bio-terge AS40, cationic foaming agents, and non-ionic foaming agents, etc.

The density of the building material having the core composition just described is generally between 0.4 g/ml and 0.6 g/ml, although such density can vary greatly depending on the selection and amount of each component, as well as the presence or absence of foaming.

The core matrix may further comprise one or more additives or fillers. Alternatively, the core matrix may be devoid of further additives and/or fillers. When present, these may be present in an amount between 0.01 and 50% by weight of the total weight of the core matrix in wet mixture. In one exemplary embodiment, the microspheres may be blended with expanded siliceous inorganic particles, such as perlite, to lower the density of the building material, decrease its weight, and reduce manufacturing costs. Specifically, it is contemplated that expanded siliceous inorganic particles may replace a portion of microspheres in an amount between 1% and 50% by weight of the total weight of the core matrix in wet mixture.

The core matrix may further comprise a setting agent configured or intended to enhance the water resistant properties of the building material, and particularly the core matrix of the building material. In one exemplary embodiment, the setting agent may comprise Class C fly ash. In another exemplary embodiment, the setting agent may comprise zinc oxide. In still another exemplary embodiment, the setting agent may comprise sodium fluorosilicate.

In exemplary core matrix compositions utilizing a setting agent, microspheres may be combined with an inorganic binder (e.g., sodium silicate solution (comprising sodium silicate and water)) in a 1:1 ratio, with the core matrix composition a setting agent present in an amount between about 10% and about 30% of the total weight of the inorganic binder. For example, the core matrix composition may comprise, as the setting agent, Class C fly ash present in an amount between 15 and 25% of the total weight of an inorganic binder. In another example, the core matrix composition may comprise, as the setting agent, either zinc oxide or sodium fluorosilicate present in an amount between about 5 and 15% of an inorganic binder. If an organic binder component is also to be used, such may be combined in an amount between 5 and 20% of the total weight of the inorganic binder component.

The facing membrane 34, and/or 54 are shown in FIG. 2. The second facing membrane comprises a paper material similar to that found on various wallboard products, such as drywall or the wallboard incorporated by reference herein, as noted above. The first facing membrane comprises metal or a metal alloy. The metal may be quilted, corrugated or otherwise comprise one or more nonplanar surface configurations. In a further embodiment, the metallic facing membrane can comprise or consist essentially of aluminum or quilted aluminum. In such cases, the aluminum may have a thickness ranging from about 0.0051 cm (.002 in.) to about 0.025 cm (0.010 in), and more commonly between 0.0102 cm (0.004 in.) and 0.0127 cm (0.005 in.). Optionally, the metallic facing membrane, e.g. an aluminum facing membrane, can be embossed or otherwise include a three-dimensional pattern on the surface, or throughout the entire length of the membrane.

As the final product is desirably a cohesive one, in one aspect, the core material and facing sheet of the wallboard can be optimized for proper or superior adhesion, thus ensuring the facing sheet will remain secured to the core material. As such, additional binder or binders at the surface level can be utilized to improve adhesion of a facing sheet to the core matrix. Alternatively, a different adhesive agent can be utilized to improve adhesion of a facing sheet to the core matrix.

FIG. 6 further illustrates the exposed side 718 of the core matrix as comprising a multi-elevational surface configuration. The purpose of providing a multi-elevational surface configuration formed about one surface, particularly the exposed surface, of the core matrix is at least twofold - 1) to significantly further enhance the sound attenuation or damping properties of the building material, namely to ensure acoustic isolation and absorption over a wide range of frequencies, and 2) to enhance the flex strength of the building material by eliminating shear lines. As will be described below, many different multi-elevational surface configurations are contemplated herein. Those skilled in the art will recognize the benefits of providing a series of peaks and valleys about a surface to create different surfaces located in different elevations, as well as different surfaces oriented on different inclines, particularly for the specific purpose of attenuating sound. Sound waves incident on these different elevational and/or oriented surfaces are more effectively attenuated.

In the specific embodiment shown, the multi-elevational surface configuration comprises a waffle pattern, with a plurality of protruding members 718, having a square or rectangular cross-section, defining a plurality of recesses 726. This series of peaks and valleys effectively creates a plurality of surfaces (in this case horizontal surfaces 730 and 734) that are located in different elevations about the overall surface of the core matrix 714. In addition, the protruding members 718 may be configured to provide surfaces oriented at different angles (in this case, the protruding members 718 also define several vertically oriented surfaces 738).

It is further contemplated that a separate mesh facing sheet may or may not be disposed over the exposed multi-elevational surface of the core matrix 714. If used, the mesh facing sheet is preferably configured to be flexible to conform to the multi-elevational surface configuration. The mesh facing sheet may be made from glass, plastics (e.g., extruded plastics), or other materials, depending upon the particular application and need.

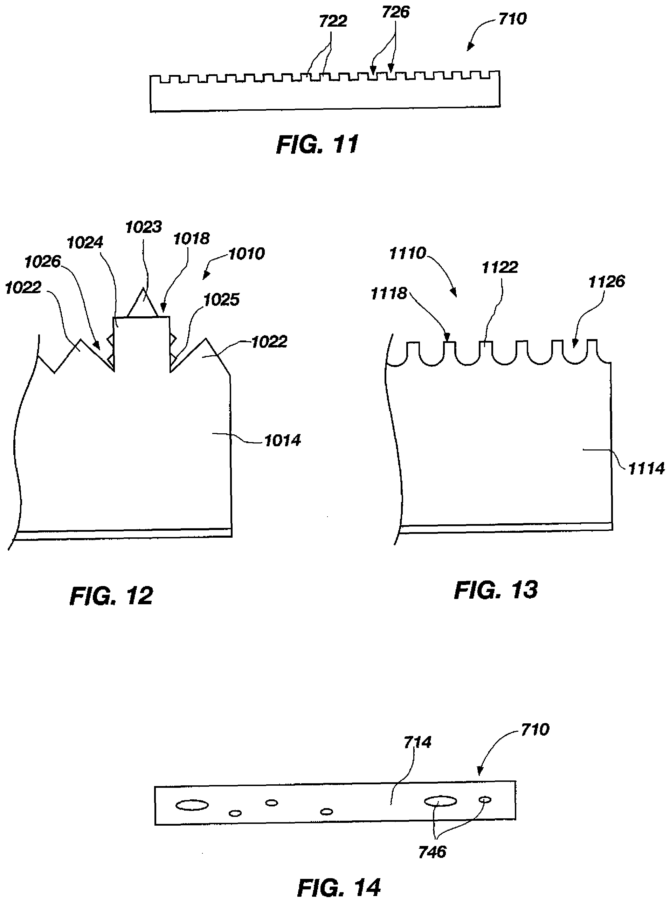

FIGS. 6 and 14 further illustrate the building material 710 as comprising a plurality of cavities or air pockets 746 strategically formed and located throughout the core matrix 714, and designed to reduce the overall weight of the building material without significantly affecting the strength or other properties of the building material. Preferably the cavities 746 are randomly located throughout the core matrix 714, but they may also be arranged in a pre-determined pattern. The cavities 746 may be formed in accordance with any known method during the manufacture of the building material. Essentially, the cavities 746 function to define a plurality of voids or air pockets within the core matrix 714 at various locations. The cavities 746 may be sized to comprise a volume between about 0.2 and about 200 cm³, and preferably between about 5 and about 130 cm³. These not only help to reduce weight, but also help to increase the overall R value due to the dead air space. In addition, these help to further attenuate sound as these provide additional surfaces that function to absorb sound waves rather than transmit them.

With reference to FIGS. 7-A and 7-B, shown is a building material formed in accordance with another exemplary embodiment of the present invention. The building material 810 is similar in many respects to the building material 710 discussed above and shown in FIG. 6. However, building material 810 comprises a lath 854 disposed or sandwiched within the core matrix 814. The lath 854 comprises a plurality of intersecting members 856 forming a grid having a plurality of openings 858. The lath 854 functions to provide support and stability to the core matrix 814, as well as additional strength. In addition, the lath 854 increases the mass of the building material 810, which reduces the potential for vibration, thus contributing to the sound attenuation properties of the building material 810. The lath 854 may comprise many different types and configurations, with the grid and openings being of different sizes and configurations. The lath 854 shown in FIG. 7 is not intended to be limiting in any way.

In one aspect, the lath 854 may comprise a metal, fiberglass, or plastic mesh or mesh-like material. This reinforcing lath material provides strength to the building material 810, and further supports the microspheres. The lath 854 may also be made from glass, plastics (e.g., extruded plastics), or other materials, depending upon the particular application and need.

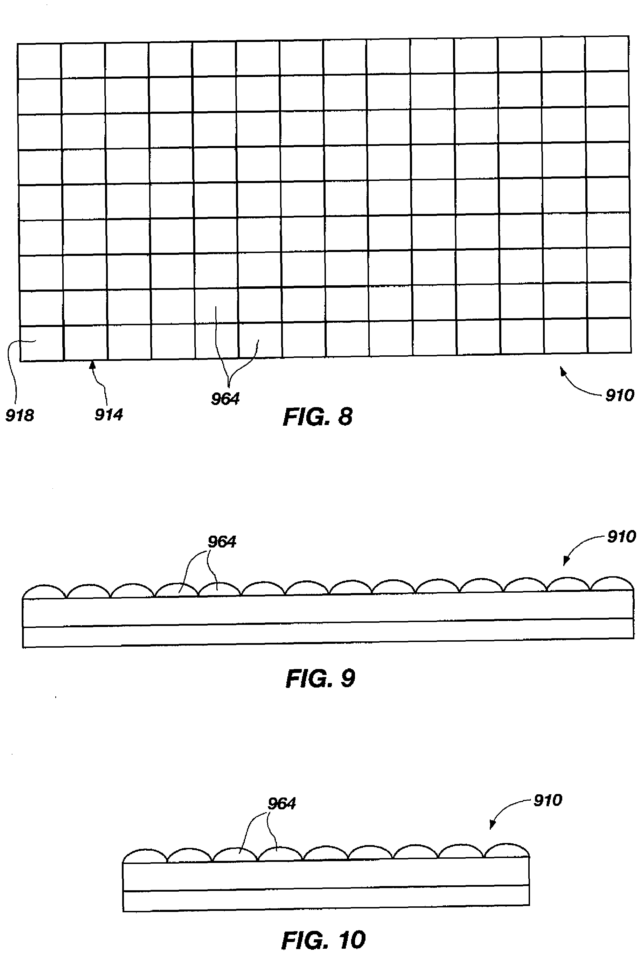

With reference to FIGS. 8-10, illustrated is a building material 910 formed in accordance with another exemplary embodiment of the present invention. In this embodiment, the building material 910 comprises a core matrix 914 having a first surface 918. Formed in the first surface 918 is a multi-elevational or nonplanar surface configuration in the form of a repeating pattern of pillow-type protrusions, thus providing multiple different surfaces or surface areas in multiple different elevations. The protrusions may be any desired size, configuration and height. Therefore, those shown in the drawings are intended to be merely exemplary.

With reference to FIG. 11, illustrated is a side view of the building material 710 of FIG. 6, having a multi-elevational surface configuration in the form of a repeating waffle-type pattern. The waffle-type configuration extends between the perimeter edges of the building material, and defines a plurality of protrusions 722 and recesses 726. FIG. 9 illustrates a cross-sectional view of a building material wherein the building material 710 comprises a plurality of strategically formed and located cavities or voids 746 in the core matrix 714.

FIG. 12 illustrates a detailed side view of another exemplary building material 1010 comprising a core matrix 1014 having a first surface 1018, wherein the first surface 1018 has formed therein a multi-elevational surface configuration comprising a repeating pattern of first protrusions 1022 in the form of pyramids or cones, and a repeating pattern of second protrusions 1024 having an arbitrary shape. The second protrusions 1024 are shown as comprising a primary base protrusion having a square cross-section, upper secondary protrusions 1023, and lateral secondary protrusions 1025, each having a pyramid or cone shape. First and second protrusions 1022 and 1024 define recesses 1026. While the present invention is not intended to be limited to any particular shape of protrusions, FIG. 12 illustrates that arbitrary shapes are at least contemplated.

FIG. 13 illustrates a detailed side view of another exemplary building material 1110 comprising a core matrix 1114 having a first surface 1118, wherein the first surface 1118 has formed therein a multi-elevational surface configuration comprising a repeating pattern of first protrusions 1122 and recesses 1126, wherein these form an egg carton-type pattern.

FIGS. 8-13 illustrate several different multi-elevational surface configurations. These, however, are not meant to be limiting in any way. Indeed, one skilled in the art will recognize other configurations and/or patterns that may be used to accomplish the designs of the present invention.

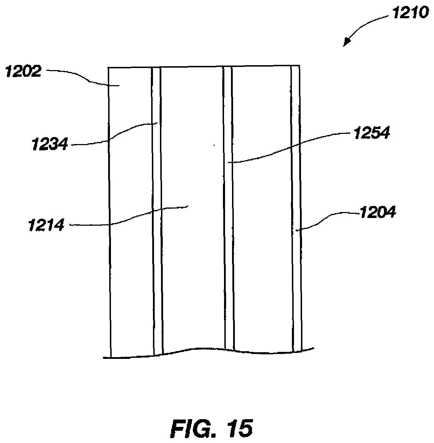

Referring now to FIG. 15, illustrated is a building material formed in accordance with another exemplary embodiment. In this particular embodiment the building material 1210 comprises a core matrix 1214, a metal lath 1254 disposed or sandwiched within the core matrix 1214, and a facing sheet 1234 comprised of tar paper. With this configuration, the building material 1210 may be used as a finishing material on the exterior of residential or commercial structures, replacing stucco. The building material 1210, comprising pre-formed panels, can be mounted or secured to the exterior walls 1202 of a structure, say a residential home, much in the same way a wallboard is mounted or secured to the interior walls of a home. Once secured in place, a stucco finish 1204 commonly known in the art may be applied to the panels to create a finished look. The stucco finish can be applied so as to sufficiently conceal any seams or gaps between adjacent building material panels. Some obvious advantages that result from providing exterior finishing panels is the elimination of the labor intensive task of securing metal lath to the exterior walls, subsequently applying plaster over the metal lath, and then waiting several days for the plaster to dry and set prior to being able to apply the stucco finish. With the pre-formed building panels shown herein, installers can mount the panels and apply the stucco finish immediately, thus significantly reducing labor and costs.

It is contemplated that such a building panel may be applied to shear panels, such as oriented strand board, to shear panels formed after the manner of the present invention, or directly to a stud frame, wherein the building panel may function as the shear panel and also receive the stucco finish directly thereto, thus eliminating the need for a separate shear panel.

As noted, a variety of methods can be useful in forming utility materials as presently contemplated. In one aspect, a method of forming a wallboard utility material can include first placing a precut facing sheet, such as a wallboard paper white, face down in an appropriate mold. A formable composition can be formed by mixing microparticles, and binder. The formable composition can be spread over the paper in the mold and can be smoothed using any method. A second facing sheet, such as a brown wallboard paper, can be placed over the mixture. A flat mold lid can be placed on top of the paper and fastened in place. The wallboard can optionally be microwaved for any period, including about 30 minutes. If utilized, microwaving can preferably be completed at partial power for the first length of microwaving. The formed composition can alternatively be directly placed in a heater to heat cure the panel. If microwaved first, the composition can be subsequently placed in a heater to further heat cure the panel. Heat curing can occur at temperatures greater than room temperature, and preferable less than temperatures required to cause damage or degradation of the paper, mold, or components of the formable composition. In one embodiment, a convection oven can be used at 163° C (325° F) for about one hour.

In one aspect, all components for the core matrix can be mixed together in a single step or in multiple addition steps in a mixer. A variety of mixers can be utilized. In a specific embodiment, an auger can be utilized to mix the components for the core matrix. The mixture can be poured into a mold lined with a facing membrane, i.e. paper or aluminum, etc. The mold can be placed on a vibrating table so as to encourage proper spread of the mixture onto the membrane. Various other methods are known in the art to properly spread the mixture onto the membrane and are likewise contemplated herein. The second facing membrane can be placed on top of the leveled mixture and the mold can optionally be removed from the green or uncured wallboard. The green wallboard can then be placed in an oven. This process can occur in batch, semi-batch, or continuous design. In a continuous flow, a conveyor can move the green wallboard to and through an oven. Optionally, leveling rollers can be utilized to maintain the desired planar shape and thickness of the wallboard during drying. In the case of a continuous oven, non-limiting example parameters for the temperature include a set-point of about 371° C (700 degrees F) at the beginning of the oven, slowly decreasing to about 148.9° C (300 degrees F) at the end of the oven, with an average residence time of about 45 minutes to an hour per 1.27 cm (½ inch) thick wallboard. The presence of a metallic facing membrane can allow the method to include exposing the wallboard material to a temperature sufficient to effectuate drying and curing of the core matrix within a duration of time between 0.5 and 3 hours. The parameters recited above can be appropriately modified for equipment, variations in core matrix composition, facing membrane types, etc. In the case of batch formation, individual wallboard can be formed and placed in a multi-rack drying oven. Temperature profiles for the oven rack can range from about 121° C (250 F) to about 371° C (700 F), or can be maintained at a temperature therebetween, depending on the composition of the core matrix and the facing sheets used.

When the metal facing sheet is used, the heating elements can be configured to concentrate a majority of the heat through the metal facing sheet to the core matrix. In this manner, the heat is better received into the core matrix, steam is removed from the core matrix primarily through the second facing sheet, typically paper, and large steam pockets are not formed.

Utility materials as described herein exhibit superior qualities to many utility materials currently available. Furthermore, the superior qualities co-exist, where a material may exhibit both mold resistance and enhanced acoustic properties simultaneously. Wallboards formed of the utility materials are typically lighter than conventional gypsum wallboard by 20% to 30%. An installed R value can be up to about 19. Noise attenuation can be up to about 50 db, depending on the frequency for a Vi inch thick piece of wallboard. The core matrix won't grow mold. Wallboard is water resistant and is still hard after 2 weeks of continuous submersion under water. The material can be formulated to be fire resistant. Wallboard exhibits strong flexural strength up to two times that of conventional gypsum wallboard (e.g., 280 lbs vs. 140 lbs). Furthermore, the wallboard can withstand impacts without crumbling or displacement in surrounding areas such as a corner.

In a plurality of tests conducted on a present invention wallboard material (including microspheres, sodium silicate, and an organic binder), the following results were collected: flexural strength range 186.02 newton meters (137.2 Ibf) to 233.57 newton meters (164.9 Ibf), average 173.74 newton meters (153 Ibf); nail pull 97.62 -177.96 newton meters (72-87 lbf), average 105.75 newton meters (78 Ibf); weight of 10.16 cm (4 inch) by 20.32 cm (8 inch) by 1.27 cm (½ inch) sheet average 42.1 lbs; acoustic transmission based on a variety of frequencies ranging from 80 to 8000, average 50.9 db; R value range 16.2 to 19, average 17.5; mold resistance found no measurable mold growth; fire resistance testing found no combustion for exposure to propane torch flame for 15-120 minutes; and edge hardness 18.98 newton meters (14-16 Ibf), average 20.47 newton meters (15.1 Ibf). As shown, the wallboard material excels in a plurality of desirable qualities and provides a superior construction material.

Additional testing was completed on wallboard material (including microspheres, sodium silicate and vinyl acetate/ethylene copolymer, where the wallboard is 1.27 cm (½ " thick), the sodium silicate to cenosphere weight ratio is about 1 : 1, the sodium silicate to EVA weight ratio is about 10:1, the cenospheres are 300-600 microns). Unless otherwise noted, the testing was compared to baseline gypsum wallboard and the present invention board and gypsum wallboard were 1.27 cm (½ inch) thick. The following results were collected: *Surface finish* - no noticeable ifference in the surface finish.
*Snap and dust -* wallboard material of the present invention would snap cleaner with a straighter and more square line and did not produce the amount of dust that gypsum wallboard did.
*Flexural strength* - (according to ASTM C 473-03) gypsum wallboard had normal breaking at 63.5 kg (140 lbs) of force. The present invention wallboard had a minimum of 72.6 kg (160 lbs) force, with many samples obtaining 10-12% higher values.
*Nail pull resistance* - (according to ASTM C 473-03) 115.24 -122.02 newton meters (85-90 lb ft.) compared to gypsum 104.40 (77 lb ft).
*Dimpling* - dimpling yielded a more consistent pattern without crushing the board or creating microfractures in localized areas. Gypsum board crushes and creates microfractures. Dimpling testing, along with nail and screw tests in extreme edges were similarly favorable.
*Edge crush* - (striking edges on right angle metallic surface of weighted samples) slight indentation, but relatively unharmed compared to gypsum being easily damaged.
*Weight* - with various component ratios, minimal weight reduction over gypsum wallboard was 20%, maximum weight reduction over 30%.
*Mold growth* - (according to ASTM D 3273) board was non-fungus nutrient and does not support mold growth.
*Water resistance* - (immersed board in water and tested frequently to see when core would soften) board withstood minimum of four days under water, totally submerged before softening was found. Many samples lasted more than one month without softening. Gypsum board softens within several hours and crumbles apart within about one day.
*Fire resistance* - (direct propane flame, torching one side of the material while measuring thermal rise on opposite side) flame side paper would scorch and smolder away with a time factor similar to the paper of gypsum, which was less than about 2 minutes. The board would then have a gradual thermal rise over the next 20 minutes to 350 degrees C. Gypsum board rises to 80 degrees C in about 2 minutes and maintains that temperature for 5 minutes, then rises quickly to 400 degrees C after 20 minutes.
*K value* - value of about 0.07 compared to gypsum board's K value of 0.11. This translates to gypsum's lower performance by transferring heat faster than the inventive board.

### EXAMPLES

The following examples illustrate embodiments of the invention that are presently known. Thus, these examples should not be considered as limitations of the present invention, but are merely in place to teach how to make the best-known compositions and forms of the present invention based upon current experimental data. Additionally, some experimental test data is included herein to offer guidance in optimizing compositions and forms of the utility material. As such, a representative number of compositions and their method of manufacture are disclosed herein.

### EXAMPLE 1 - TESTING OF UTILITY MATERIAL OF CENOSPHERES AND SODIUM SILICATE

A mixture of cenospheres of the form of Extendospheres™ and sodium silicate were combined and allowed to dry and form a fire-resistant insulating material Extendospheres of a 300-600 micron diameter size range were combined with sodium silicate solution (O type from PQ corporation) in a 1:1 weight ratio. The wet slurry was poured into a cavity around the turbine and allowed to dry. It formed a hardened mass of Extendospheres™ and sodium silicate. The material was tested with an Ipro-Tek single spool gas turbine. The tests showed that the material has a high insulation capacity, and the ability to withstand heat. The insulation was exposed to temperatures of up to 1200° C. However, it was found that when the material is exposed directly to flames for periods of more than a few minutes, it cracks and blisters and begins to lose physical strength.

### EXAMPLE 2 - FORMATION OF MOLD TO FORM WALLBOARD

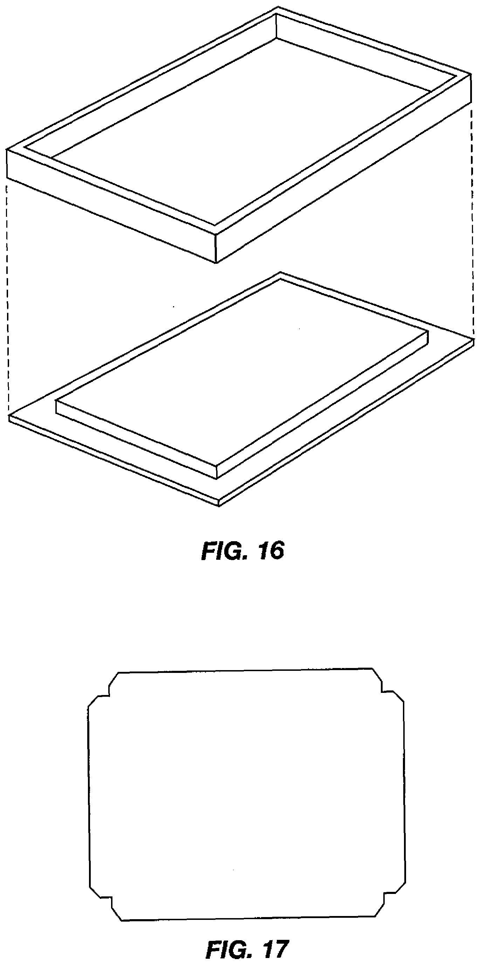

In one aspect, the utility material can be wallboard panels. The panels can optionally be formed by exposing an uncured wallboard to microwaves. Such formation, as well as general wallboard formation, can utilize a mold. An example of a mold can be made up of a vinylester resin mold having top and bottom pieces. To form the vinylester resin mold, a wood mold is first constructed. The wood mold can be formed according to the shape and dimensions as illustrated in FIG. 16.

To form the vinylester resin mold, an outer mold of wood is attached to the base of the wood mold using double sided tape. Any releasable binder or means of attaching can be alternatively used. A resin mixture is formed of 97.5 wt% vinylester resin mixed with 2.5 wt% methyl ethyl ketone peroxide (MEKP) catalyst. Microspheres of the form of Extendospheres and the resin mixture are added in a 1:1 ratio to form a core mixture. The core mixture is mixed well using a stirring device that was mounted in a drill such as you would use to mix paint. Mix time was about 3 minutes. The core mixture is poured into the prepared wood mold and distributed to cover the full mold, including all corners. The mixture is gently smoothed out, although not pressed into the mold using short dropping, manual shaking, mechanical vibration, and spreading tools such as trowels. The mixture is not pressed into the wood mold as pressing it can decrease the porosity of the resulting vinylester resin mold and can make it unusable. The mixture is cured at room temperature until it is rigid and strong to the touch. The curing time is typically about three hours. The porous vinylester resin mold is then carefully removed. The resulting vinylester resin mold has a cavity 29.53 cm (11.625 inches) by 38.74 cm (15.25 inches) by 1.27 cm (0.5 inches) deep, with a 0.95 cm (0.375 inch) wall around the outside edge. A top piece for the vinylester resin mold is formed using the same procedure and results in a mold in a rectangle having dimensions of 31.43 cm (12.375 inches) by 16 inches by 1.27 cm (0.5 inches) deep.

### EXAMPLE 3 - PREPARATION OF WALLBOARD USING MOLD

As noted, the utility material can be in the form of wallboard panels. The panels can optionally be formed by using the porous vinylester resin mold. First, a wallboard backing paper is cut using a backing paper template as shown in FIG. 17. Although a particular backing paper shape is illustrated, it should be understood that the backing paper can be of any shape or size sufficient to form a segment of wallboard. Facing paper is cut to a rectangle sized just smaller than the greater dimensions of the backing paper. In the present embodiment, the facing paper is cut to an 29.53 cm (11.625 inch) by 38.74 (15.25 inch) rectangle. The backing paper is folded and placed in the porous mold. A wallboard mixture may be formed using:
700 to 900 g microspheres
1100 to 1300 g sodium silicate solution, such as that sold by "O"
300 to 500 g latex binder
20 to 30 cc foaming agent

Specifically, the foaming agent is added first to the sodium silicate solution and mixed using a squirrel mixer at 540 RPM for 2 minutes. The latex binder is added to the mixture and mixed for an additional 30 seconds on the same settings. The microspheres are added slowly while mixing, over 1 to 2 minutes, until the mixture is uniform.

The wallboard mixture is poured into the lined mold and leveled out using a spatula or paint stick. It should be noted that any tool or method could be used at this point to level the mixture. The mixture is further leveled by vigorous shaking. The sheet of facing paper is placed on top of the mixture and covered with the top panel of the vinylester resin mold. The mold is placed in a microwave and the panel is radiated for the desired amount of time. Preferably, the mold is turned often to produce a more even drying of the panel. The panel should not be subjected to continuous radiation for any extended amount of time to reduce or prevent large voids in the wallboard core. The power level of the microwave radiation can be set to control the amount of time the microwave is on. The time on and off of the microwave can be according to Table 1:

**Table 1**

| Power Level | Time On (Seconds) | Time Off (Seconds) |
|---|---|---|
| 1 | 3 | 19 |
| 2 | 5 | 17 |
| 3 | 7 | 15 |
| 4 | 9 | 13 |
| 5 | 11 | 11 |
| 6 | 13 | 9 |
| 7 | 15 | |
| 8 | 17 | 5 |
| 9 | 19 | 3 |
| 10 | 22 | 0 |

Once properly heated, the resulting panel of wallboard can be carefully removed from the mold.

### EXAMPLE 4 - FLEXURAL STRENGTH TESTING

An important feature of wallboard is the flexural strength of the board. Each sample board was prepared by forming a core matrix material including the components outlined in Table 2 and spreading the mixture into a mold cavity and leveling it off. The resulting sample is 1.27 cm (0.50 inches) thick and 5.1 cm (2 inches) wide. Each sample is dried in an oven at 100° C until dry as determined by Aquant moisture meter. The sample is suspended between two supports that are 15.24 cm (6 inches) apart so that 1-1.5 inches rests on either side of the support. A quart size paint can is placed in the center of the suspended sample and slowly filled with water until the sample breaks at which point the weight of the can is measured and recorded. Flexural strength is important for normal handling, installation, and use. Strength at least equal to gypsum wallboard was desired, for uses wherein the wallboard could replace conventional gypsum wallboard. Each wallboard includes a different composition as outlined in Table 2.

**Table 2**

| Run | Cenospheres (g) | Water (g) | Binder (type, g) | Foaming Agent (g) | Dry weight (g) | Weight to break (kg) |
|---|---|---|---|---|---|---|
| 1 | 50 | 6.0 | O, 52.4 | 1.0 | 70.2 | 5.0 |
| 2 | 50 | 0 | O, 87.2 | 2.0 | 83.7 | 20.6 |
| 3 | 50 | 14.1 | RU, 42.9 | 1.0 | 70.2 | |
| 4 | 50 | 14.4 | RU, 71.4 | 2.0 | 83.6 | 18.0 |
| Foam | 50 | 20 | RU, 71.4 | 16.4 | 83.6 | 9.2 |
| 5 | 50 | 8.0 | BW-50, 47.6 | 1.0 | 70.2 | 5.1 |
| 6 | 50 | 7.0 | BW-50, 79.2 | 2.0 | 83.7 | 7.4 |

The ingredients in each row were combined then mechanically whipped to produce a foamed product. The foamed product was then cast in a mold. All binders used are sodium silicate based. Type O binder is a viscous sodium silicate solution from PQ Corporation. Type RU binder is also from PQ Corporation and is a sodium silicate solution that is similar to O type but not as viscous. RU type is more watery and has a lower solids content. And, type BW-50 binder, also from PQ Corporation. BW-50 is also a sodium silicate solution, and has a lower ratio of silica to disodium oxide. As illustrated, the amount and type of binder can be optimized to create a wide range of flexural strengths.

### EXAMPLE 5 - FLEXURAL STRENGTH TESTING II

Flexural strength testing was conducted on seven sample boards according to the procedure outlined in Example 4. The components of each sample board and the flexural strength testing weight are recorded in Table 3.

**Table 3**

| Run | Cenospheres (g) | Water (g) | Binder (g) | Foaming Agent (g) | Dry weight (g) | Weight to break (kg) - no paper | Weight 10 break (kg) - Manilla folder | Weight 10 break (kg) - cardboard |
|---|---|---|---|---|---|---|---|---|
| 1 | 50 | 17.9 | 14.3 | 1.0 | 56.7 | | | |
| 2 | 50 | 15.5 | 28.6 | 1.0 | 63.5 | 2.06 | | |
| 3 | 50 | 12.1 | 42.9 | 1.0 | 70.2 | 11.96 | 21.55 | |
| 4 | 50 | 14.3 | 57.1 | 2.0 | 76.9 | 14.37 | | |
| 5 | 50 | 14.4 | 71.4 | 2.0 | 83.6 | 15.35 | 26.89 | 36.65 |
| 6 | 50 | 11.6 | 85.7 | 2.0 | 90.4 | 21.8 | | |
| 7 | 50 | 9.4 | 100.0 | 2.0 | 97.1 | 20.85 | 29.40 | 34.99 |
| Ceiling Tile ½" thick | | | | | | 5.57 | | |
| Dry wall ½" thick | | | | | | 26.91 | | |

As illustrated, increasing the density and increasing the binder content in the sample generally results in stronger samples. Increasing the amount of water in the sample mixture generally decreases the density of the mixture and results in decreased strength of the sample. In the samples including testing with a Manilla folder and/or cardboard, the noted material was placed on both sides of the sample. Such arrangement, with the core material flanked by a paper product, is comparable to conventional gypsum wallboard. As illustrated, the inclusion of paperboard on both sides, either in the illustrated form of Manilla folder or cardboard, significantly increased the sample's strength.

### EXAMPLE 6 - FLEXURAL STRENGTH TESTING III

A number of sample panels were formed according to the procedure outlined in Example 4, with the exceptions that strips of paper of the noted thickness to 5.1 cm (2 inches) wide by 27.9 cm (11 inches) long. One strip is placed in the mold cavity before pouring in the core matrix material. After pouring and leveling the mixture, another sheet of the same thickness is placed on top of the mixture. The mixture is covered with wire mesh and weighed down to keep it in place during drying. For the results listed below, the paper did not properly adhere to the core matrix, so the test results reflect samples having only one sheet of paper attached. The flexural strength tests were performed paper side down. Presumptively, the results would be higher for a sample including both facing sheets.

The core matrix material for each sample included 250 g Extendospheres, 40 g water, 220 g binder, 10 g foaming agent. The dry weight for each sample is 334.9. For paper having a thickness of 0.23 mm (0.009"), the weight to break was 6.6 kg. For paper having a thickness of 0.38 mm (0.015"), the weight to break was 7.5 kg. For paper having a thickness of 0.51 mm (0.020"), the weight to break was 5.2 kg.

### EXAMPLE 7 - ADDITIONAL TESTING ON SAMPLE BOARDS

A number of sample panels were formed in accordance with the methods and compositions outlined in the previous Examples. Typically, a mixture such as that given above is cast in a mold comprising paper disposed above and below the core and a frame around the perimeter of the sample to contain the wet core material while it dries and cures. After drying and heating the wallboard sample can be tested for mechanical properties. The composition of each sample and the associated results are illustrated in Table 4.

### Flexural Strength testing - "Flex"

A 1.27 cm (0.5 inch) thick sample that is 5.1 cm (2 inches) wide by 15.24 to 20.32 cm (6 to 8 inches) long is placed on the test fixture and is thus suspended between two legs. The legs are approximately 10.8 cm (4.25 inches) apart. The test apparatus is equipped with the flexural test attachment, with the bar on the attachment situated parallel to the test specimen. The flexural test attachment is centered midway between the legs of the test fixtures. A bucket is hooked to the end of the test apparatus and weight is slowly added to the bucket until the test specimen fails. The weight of the bucket is measured to obtain the Flex results.

### Nail Pull Resistance testing

A 1.27 cm (0.5 inch) thick sample that is 15.24 cm (6 inches) wide by 15.24 cm (6 inches) long is drilled to have a 0.39 cm (5/32 inch) pilot hole in the center of the sample. The sample is placed on a nail pull fixture, with the pilot hole centered on the 0.397 cm (2.5 inch) diameter hole in the nail pull fixture. A nail is inserted into the pilot hole. The shank of the nail should be approximately 0.37 cm (0.146 inches) in diameter, and the head of the nail should be approximately 0.84 cm (0.330 inches) in diameter. A screw is inserted into the indicated hole on the test apparatus so that it sticks out a distance of approximately 5.1 cm (2 inches). The head of the screw should be smaller than the head of the nail used in the test. The sample and fixture are positioned underneath the apparatus so that the centerlines of the nail and screw line up. A bucket is hooked to the end of the test apparatus. Weight is slowly added to the bucket until the test specimen fails. The weight of the bucket is measured. Cure, End, and Edge Hardness testing

A 1.27 cm (0.5 inch) thick sample that is 5.1 cm (2 inches) wide by 15.24 to 20.32 cm (6 to 8 inches) long is clamped in the vice of the testing equipment. A screw is inserted into the indicated hole on the test apparatus so that it sticks out a distance of approximately 3.81 cm (1.5 inches). The head of the screw should be 0.6 cm (0.235 inches) in diameter. The vice and sample are positioned underneath the test apparatus, so that the head of the screw is centered on the 1.27 cm (0.5 inch) edge of the sample. A bucket is hooked to the end of the test apparatus. Weight is slowly added to the bucket until the screw penetrates at least 1.27 cm (0.5 inches) into the sample. If the screw slips off of the side and tears through the paper, the sample is discarded and the test is repeated.

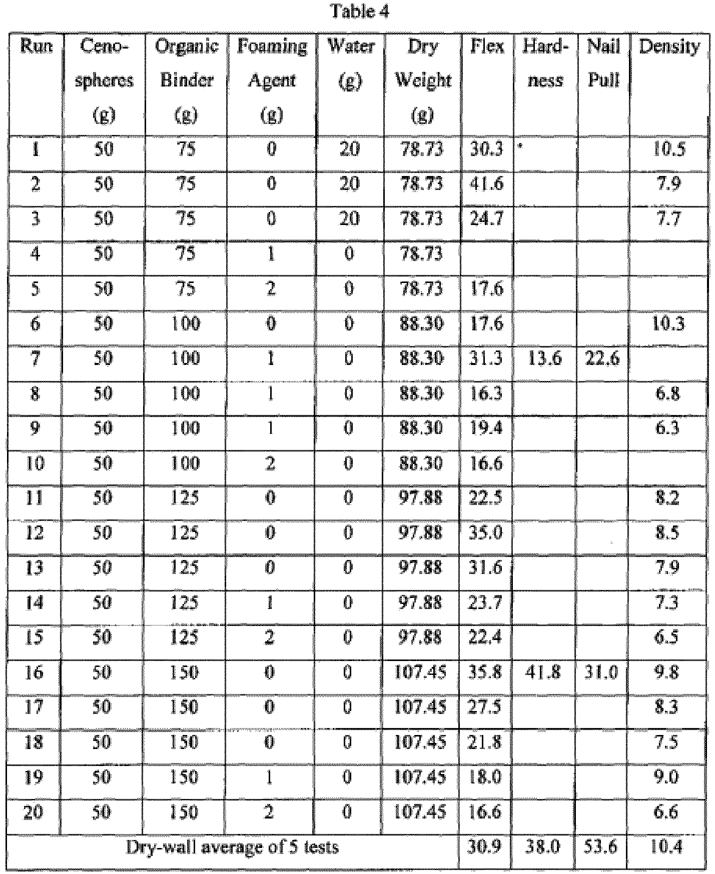

### EXAMPLE 8 - TEST RESULTS II

A sample of wallboard including 50 g Extendospheres, and 2 cc surfactant. The first type of wallboard tested included 100 g of sodium silicate binder mixture. The second type of wallboard tested included 75 g sodium silicate binder mixture and 25 g latex binder. The test boards had a thickness range from 0.98 cm (0.386 inches) to 1.70 cm (0.671 inches). Testing was completed according to ASTM 473-3, 423, El 19, and D3273-00 standards.

Flexural strength was tested and determined to be an average of 230.49 newton meters (170 Ibf) (white side up) for the wallboard of the first type, based on three samples. The wallboard of the second type was found to average 136.94 newton meters (101 Ibf) (white side down), based on three samples. The highest measurement of the six test samples was 267.10 newton meters (197 Ibf). A comparative conventional gypsum wall board was measured to be 145.07 newton meters (107 Ibf).

Edge hardness was determined to be an average of 20.34 newton meters (15 Ibf). The gypsum wall board had an average minimum edge hardness of 14.91 newton meters (11 Ibf). The sample showed a 36% improvement over the gypsum sample.

Nail pull resistance was measured to be 134.23 newton meters (99 Ibf), based on a 3 sample average. The gypsum wall board, on the other hand, measured a 104.40 newton meters (77 Ibf).

The thermal resistance of the sample wall board was tested. One side of the wall board was raised to 100° C for two hours with no measurable temperature increase on the cool side of the sample.

The weight of the sample was compared to the conventional gypsum and found to be approximately 30% less than the gypsum board.

### EXAMPLE 9 - WALLBOARD FORMATION

As another example of wallboard formation, a sodium silicate wallboard is formed by the following procedure. Sodium silicate is first foamed by adding 2 cc Steol FS 406 to 100 g sodium silicate solution (PQ Corporation O binder). The mixture is placed in a 6 inch diameter paint container. The mixture is mixed using a 3 inch diameter "Squirrel" mixer attached to a drill press running at 540 rpm. The operator rotates the paint container in the opposite direction than that of the mixer. The mixture is foamed for approximately one minute and fifteen seconds. The volume of the sodium silicate should at least double during the foaming process. 50 g of Extendospheres™ (having a size of 300 to 600 microns) are added to the mixture and mixed for one more minute with the "Squirrel" mixer. The vanished mix is then poured into the mold and smoothed with a paint stick.

Once the foamed mixture is smoothed in the mold, the mold is placed in an oven set at 85° C. The mixture is allowed to dry for approximately 12 hours at this temperature.

The backing paper is added to the core after the core has dried sufficiently. A light coat of sodium silicate is painted onto the back of the paper, and the paper is placed on the core matrix. The core and paper are covered on all sides by a polyester breather material and then placed in a vacuum bag. The vacuum bag is placed in an oven set at 85° C and a vacuum is applied to the part. The part is allowed to dry for 45 minutes to one hour in the oven. The finished part is then removed from the oven and trimmed to desired size. Various materials can optionally be added to the core composition to accelerate drying.

### EXAMPLE 10 - WALLBOARD FORMATION II

Another wallboard is produced according to the method in Example 9. The composition of the wallboard is altered in that 75 g of sodium silicate binder solution is used along with 25 g organic binder. The organic binder is added to the sodium silicate binder solution along with the Steol, prior to foaming.

### EXAMPLE 11 - WALLBOARD FORMATION III

Another wallboard is produced by First masking a mold. A base board is lined with FEP. The FEP is wrapped tightly to reduce wrinkling on the surface. Boarder pieces of the mold are wrapped with Blue Flash Tape. Killer Red Tape is used to attached to border pieces to the base piece to form a border with an inside dimension of 35.56 cm (14 inches) by 14.72 cm (18 inches).

500 g of microspheres (300-600 microns in size), 750 g "O" binder, 250 g organic binder, and 20 cc foaming agent are measured and set aside. The O binder and foaming agent are mixed using a Squirrel mixer at 540 RPM for about 2 minutes. The organic binder is added to the mixture and mixed for an additional 30 seconds. The microspheres are slowly added while mixing. When all microspheres are added, the mixture is mixed for an additional 30 seconds or until the mixture is uniform. The mixture is poured into the mold and leveled. The mold is additionally subjected to vigorous shaking for additional leveling. The mold is placed into an oven at 100° C and dried for 12 to 18 hours until completely dry. Paper is applied to the sample by first cutting a piece of backing paper and a piece of facing paper slightly larger than the panel. An even coat of sodium silicate solution is applied to one side of the paper. The paper is placed on top and bottom surfaces of the panel and pressure is applied evenly across the surface. The pressure can optionally be applied by vacuum bagging the panel. The panel can be placed back in the oven at 100° C for about 15 minutes until the paper is fully adhered to the surface of the panel.

The foregoing detailed description describes the invention with reference to specific exemplary embodiments. However, it will be appreciated that various modifications and changes can be made without departing from the scope of the present invention as set forth in the appended claims. The detailed description and accompanying drawings are to be regarded as merely illustrative, rather than as restrictive, and all such modifications or changes, if any, are intended to fall within the scope of the present invention as described and set forth herein. Accordingly, the scope of the invention should be determined solely by the appended claims rather than by the descriptions and examples given above.

## Claims

1. A method of forming a wallboard material, comprising:
forming a mixture including:
from about 25 wt% to about 60 wt% of microparticles based on wet formulation,
from about 20 wt% to about 36 wt% dry sodium silicate,
disposing the mixture between a first facing membrane and a second facing membrane; and
heat curing the mixture in a single step sufficient to form a wallboard material having the first facing membrane and the second facing membrane attached to a core matrix, said heat curing being completed in a time less than about 1.5 hours without causing damage to the wallboard material; and
**characterised in that** the mixture further includes from about 2 wt% to about 6 wt% of a dry vinyl acetate; and
wherein the first facing membrane is a metallic facing membrane.

2. The method of claim 1, wherein the mixture is free from fibrous materials.

3. The method of claim 1, wherein the metallic facing membrane includes aluminum, or wherein the metallic facing membrane is aluminum, or wherein the metallic facing membrane is embossed or includes three-dimensional shaping.

4. The method of claim 1, wherein the second facing membrane is a paper product.

5. The method of claim 1, wherein the step of heat curing the mixture includes utilizing a leveling roller to maintain shape.

6. The method of claim 1, wherein the cured wallboard material has a water content of less than about 5 wt%.

7. The method of claim 1, wherein the vinyl acetate includes vinyl acetate/ethylene copolymer.

8. The method of claim 1, wherein the microparticles are present in an amount from about 30 wt% to about 40 wt% of the wet mixture.

9. A method of improving drying time without causing damage to a wallboard material having a core matrix comprising greater than about 25 wt% microparticles based on wet formulation, greater than about 20 wt% dry sodium silicate, and greater than about 2 wt% of a dry vinyl acetate, said method comprising: depositing a metallic facing membrane on at least one face of the core matrix material and exposing the wallboard material to a temperature profile sufficient to effectuate drying and curing of said core matrix within a duration of time between 0.5 and 3 hours.

10. The method of claim 9, wherein the drying and curing time is less than about 1.5 hours.

11. A wallboard material, comprising
a first facing membrane and a second facing membrane; and
a core matrix material disposed and cured between the first facing membrane and the second facing membrane comprising:
from about 25 wt% to about 60 wt% of microparticles based on wet formulation, the microparticles having a size of from about 10 to about 1000 microns,
from about 20 wt% to about 36 wt% dry sodium silicate; and
**characterised in that** first facing membrane is a metallic facing membrane and the core matrix further comprises from about 2 wt% to about 6 wt% of a dry vinyl acetate.

12. The wallboard material of claim 11, wherein the wallboard material has a nail pull resistance of greater than about 115.24 newton meters (85 lb ft.)

13. The wallboard material of claim 11, wherein the wallboard material, of a ½ inch thick sheet has a flexural strength of at least about 72.6 kgf (160 lbf).

14. The wallboard material of claim 11, wherein the cured core matrix withstands softening while submerged in water for at least about 4 days.

15. The wallboard material of claim 11, wherein the wallboard material has a K value of from about 0.06 to about 0.08.

## Patentansprüche

1. Verfahren zum Bilden eines Wandplattenmaterials, das Folgendes beinhaltet:
Bilden eines Gemischs, das Folgendes enthält:
etwa 25 Gew.-% bis etwa 60 Gew.-% Mikropartikel bezogen auf die Nassformulierung,
etwa 20 Gew.-% bis etwa 36 Gew.-% trockenes Natriumsilikat,
Anordnen des Gemischs zwischen einer ersten Verkleidungsmembran und einer zweiten Verkleidungsmembran; und
Wärmehärten des Gemischs in einem einzigen Schritt, der ausreicht, um ein Wandplattenmaterial zu bilden, bei dem die erste Verkleidungsmembran und die zweite Verkleidungsmembran an einer Kernmatrix befestigt sind, wobei das genannte Wärmehärten in einer Zeit von weniger als etwa 1,5 Stunden abgeschlossen ist, ohne das Wandplattenmaterial zu beschädigen; und
**dadurch gekennzeichnet, dass** das Gemisch ferner etwa 2 Gew.-% bis etwa 6 Gew.-% eines trockenen Vinylacetats enthält; und
wobei die erste Verkleidungsmembran eine metallische Verkleidungsmembran ist.

2. Verfahren nach Anspruch 1, wobei das Gemisch frei von Fasermaterialien ist.

3. Verfahren nach Anspruch 1, wobei die metallische Verkleidungsmembran Aluminium enthält oder wobei die metallische Verkleidungsmembran Aluminium ist oder wobei die metallische Verkleidungsmembran geprägt ist oder eine dreidimensionale Formgebung beinhaltet.

4. Verfahren nach Anspruch 1, wobei die zweite Verkleidungsmembran ein Papierprodukt ist.

5. Verfahren nach Anspruch 1, wobei der Schritt des Wärmehärtens des Gemischs das Verwenden einer Nivellierwalze beinhaltet, um die Gestalt beizubehalten.

6. Verfahren nach Anspruch 1, wobei das gehärtete Wandplattenmaterial einen Wassergehalt von weniger als etwa 5 Gew.-% hat.

7. Verfahren nach Anspruch 1, wobei das Vinylacetat Vinylacetat/EthylenCopolymer beinhaltet.

8. Verfahren nach Anspruch 1, wobei die Mikropartikel in einer Menge von etwa 30 Gew.-% bis etwa 40 Gew.-% des Nassgemischs vorliegen.

9. Verfahren zur Verbesserung der Trocknungszeit, ohne ein Wandplattenmaterial zu beschädigen, das eine Kernmatrix hat, die mehr als etwa 25 Gew.-% Mikropartikel bezogen auf die Nassformulierung, mehr als etwa 20 Gew.-% trockenes Natriumsilikat und mehr als etwa 2 Gew.-% eines trockenen Vinylacetats umfasst, wobei das genannte Verfahren Folgendes beinhaltet: Absetzen einer metallischen Verkleidungsmembran auf wenigstens einer Seite des Kernmatrixmaterials und Aussetzen des Wandplattenmaterials einem Temperaturprofil, das ausreicht, um das Trocknen und Härten der genannten Kernmatrix innerhalb einer Zeitdauer zwischen 0,5 und 3 Stunden zu bewirken.

10. Verfahren nach Anspruch 9, wobei die Trocknungs- und Härtezeit weniger als etwa 1,5 Stunden beträgt.

11. Wandplattenmaterial, das Folgendes umfasst:
eine erste Verkleidungsmembran und eine zweite Verkleidungsmembran; und ein Kernmatrixmaterial, das zwischen der ersten Verkleidungsmembran und der zweiten Verkleidungsmembran angeordnet und gehärtet wird, umfassend:
etwa 25 Gew.-% bis etwa 60 Gew.-% Mikropartikel bezogen auf die Nassformulierung, wobei die Mikropartikel eine Größe von etwa 10 bis etwa 1000 Mikron haben,
etwa 20 Gew.-% bis etwa 36 Gew.-% trockenes Natriumsilikat; und
**dadurch gekennzeichnet, dass** die erste Verkleidungsmembran eine metallische Verkleidungsmembran ist und die Kernmatrix ferner etwa 2 Gew.-% bis etwa 6 Gew.-% eines trockenen Vinylacetats umfasst.

12. Wandplattenmaterial nach Anspruch 11, wobei das Wandplattenmaterial einen Nagelzugwiderstand von mehr als etwa 115,24 Newtonmeter (85 lb ft.) hat.

13. Wandplattenmaterial nach Anspruch 11, wobei das Wandplattenmaterial aus einer 1/2 Zoll dicken Tafel eine Biegefestigkeit von wenigstens etwa 72,6 kgf (160 lbf) hat.

14. Wandplattenmaterial nach Anspruch 11, wobei die gehärtete Kernmatrix einer Erweichung standhält, wenn sie wenigstens etwa 4 Tage lang in Wasser eingetaucht wird.

15. Wandplattenmaterial nach Anspruch 11, wobei das Wandplattenmaterial einen K-Wert von etwa 0,06 bis etwa 0,08 hat.

## Revendications

1. Procédé de formation d'un matériau de panneau mural, comprenant les étapes consistant à :
former un mélange comprenant
d'environ 25 % en poids à environ 60 % en poids de microparticules basées sur une formulation humide,
d'environ 20 % en poids à environ 36 % en poids de silicate de sodium sec, en déposant le mélange entre une première membrane en regard et une deuxième membrane en regard ; et
thermodurcir le mélange en une seule étape suffisante pour former un matériau de panneau mural ayant la première membrane en regard et la deuxième membrane en regard attachées à une matrice centrale, ledit thermodurcissement étant effectué en une période de temps inférieure à environ 1,5 heures sans causer de dommages au matériau de panneau mural ; et
**caractérisé en ce que** le mélange renferme en outre d'environ 2 % en poids à environ 6 % en poids d'acétate de vinyle sec ; et
dans lequel la première membrane en regard est une membrane en regard métallique.

2. Procédé selon la revendication 1, dans lequel le mélange est dénué de matériaux fibreux.

3. Procédé selon la revendication 1, dans lequel la membrane en regard métallique renferme de l'aluminium, ou dans lequel la membrane en regard métallique est en aluminium, ou dans lequel la membrane en regard métallique est gaufrée ou comprend une mise en forme en trois dimensions.

4. Procédé selon la revendication 1, dans lequel la deuxième membrane en regard est un produit en papier.

5. Procédé selon la revendication 1, dans lequel l'étape de thermodurcissement du mélange comporte l'utilisation d'un rouleau niveleur pour maintenir la forme.

6. Procédé selon la revendication 1, dans lequel le matériau de panneau mural durci a une teneur en eau inférieure à environ 5 % en poids.

7. Procédé selon la revendication 1, dans lequel l'acétate de vinyle renferme du copolymère d'acétate de vinyle/d'éthylène.

8. Procédé selon la revendication 1, dans lequel les microparticules sont présentes en une quantité allant d'environ 30 % en poids à environ 40 % en poids du mélange humide.

9. Procédé d'amélioration du temps de séchage sans causer de dommages à un matériau de panneau mural ayant une matrice centrale comprenant plus de 25 % en poids environ de microparticules par rapport à la formulation humide, plus de 20 % en poids environ de silicate de sodium sec, et plus de 2 % en poids environ d'acétate de vinyle sec, ledit procédé comprenant le dépôt d'une membrane métallique en regard sur au moins une face du matériau de la matrice centrale et l'exposition du matériau de panneau mural à un profil de température suffisant pour obtenir un séchage et un durcissement de ladite matrice centrale en une période de temps comprise entre 0,5 à 3 heures.

10. Procédé selon la revendication 9, dans lequel le temps de séchage et de durcissement est inférieur à environ 1,5 heures.

11. Matériau de panneau mural, comprenant
une première membrane en regard et une deuxième membrane en regard ; et un matériau de matrice centrale disposé et durci entre la première membrane en regard et la deuxième membrane en regard comprenant:
d'environ 25 % en poids à environ 60 % en poids de microparticules par rapport à la formulation humide, les microparticules ayant une taille d'environ 10 à environ 1000 microns,
d'environ 20 % en poids à environ 36 % en poids de silicate de sodium sec ; et
**caractérisé en ce que** la première membrane en regard est une membrane métallique et la matrice centrale comprend en outre d'environ 2 % en poids à environ 6 % en poids d'acétate de vinyle sec.

12. Matériau de panneau mural selon la revendication 11, ledit matériau de panneau mural ayant une résistance à l'arrachement supérieure à environ 115,24 newton mètres (85 livres-pieds.)

13. Matériau de panneau mural selon la revendication 11, le matériau de panneau mural étant tiré d'une feuille d'une épaisseur de 1,27 cm, ayant une résistance à la flexion d'au moins 72,6 kgf (160 livres-pieds) environ.

14. Matériau de panneau mural selon la revendication 11, dans lequel la matrice centrale durcie est résistante au ramollissement pendant au moins 4 jours en cas de submersion dans l'eau.

15. Matériau de panneau mural selon la revendication 11, ledit matériau de panneau mural ayant une valeur K située dans la plage allant d'environ 0,06 à environ 0,08.
